# EUROPÄISCHE PATENTSCHRIFT

(11) **EP 3 834 031 B1**
(45) Veröffentlichungstag und Bekanntmachung des Hinweises auf die Patenterteilung: **01.11.2023**
(21) Anmeldenummer: 19749240.8
(22) Anmeldetag: 18.07.2019
(51) Int. Cl.: G02B 27/01, G02B 5/00, G02B 5/04, B60K 35/00, G02B 27/00

(54) **VERFAHREN ZUM BETREIBEN EINER BLICKFELDANZEIGEVORRICHTUNG FÜR EIN KRAFTFAHRZEUG**
METHOD FOR OPERATING A VISUAL FIELD DISPLAY DEVICE FOR A MOTOR VEHICLE
PROCÉDÉ POUR FAIRE FONCTIONNER UN DISPOSITIF D'AFFICHAGE DE CHAMP DE VISION POUR UN VÉHICULE AUTOMOBILE

(30) Priorität: 08.08.2018 DE 102018213269
(43) Veröffentlichungstag der Anmeldung: 16.06.2021
(73) Patentinhaber: Bayerische Motoren Werke Aktiengesellschaft, 80809 München (DE)
(72) Erfinder: HUBER, Wolfgang-Andreas, 82256 Fuerstenfeldbruck (DE)
(86) Internationale Anmeldenummer: PCT/EP2019/069425
(87) Internationale Veröffentlichungsnummer: WO 2020/030407

(56) Entgegenhaltungen:
- US-A1- 2016 234 485
- US-A1- 2018 188 530

## Beschreibung

### Technisches Gebiet

Die Erfindung betrifft ein Verfahren zum Betreiben einer Blickfeldanzeigevorrichtung, insbesondere eines Head-Up-Displays für ein Kraftfahrzeug, sowie eine entsprechende Steuerungseinrichtung und ein damit ausgestattetes Kraftfahrzeug. Insbesondere betrifft die vorliegende Erfindung Maßnahmen zur Vermeidung durch Doppelreflexion eines Projektionslichtstrahlenbündels an zwei optischen Grenzflächen einer teilweise transparenten reflektierenden Projektionsscheibe verursachter, zueinander versetzter Doppelbilder in einem von der Blickfeldanzeigevorrichtung erzeugten virtuellen Anzeigebild.

### Technischer Hintergrund

Blickfeldanzeigevorrichtungen in einem Kraftfahrzeug sind insbesondere unter der Bezeichnung Head-up-Display (HUD) bekannt. Damit wird ein Anzeigeinhalt, wie eine Angabe über eine Geschwindigkeitsbegrenzung, als ein virtuelles Anzeigebild in das Blickfeld des Fahrers vor dem Kraftfahrzeug eingeblendet, sodass er seinen Blick nicht von der Straße abwenden muss. Hierzu umfasst eine Blickfeldanzeigevorrichtung typischerweise eine Projektionseinheit, die durch ein unterhalb einer Armaturenbrettoberseite untergebrachtes Display und eine geeignete Projektionsoptik ein Projektionslichtstrahlenbündel mit gewünschtem Anzeigeinhalt erzeugt und auf eine teilweise transparente Projektionsscheibe, beispielsweise die Frontscheibe des Kraftfahrzeugs, projiziert, von der es zum Fahrer hin reflektiert wird.

Bei dieser herkömmlichen Bauart weist das HUD ein relativ kleines Field-of-View auf, welches in der Regel nur bis knapp an den Horizont reicht, und die Entfernung des virtuellen Anzeigebilds von der Frontscheibe ist durch den optischen Aufbau der Projektionseinheit festgelegt. Einer Vergrößerung des Field-of-View steht der begrenzte Bauraum innerhalb des Armaturenbretts entgegen. Insbesondere nimmt die bekannte Projektionsoptik viel Platz in vertikaler Richtung ein. Der Fahrer blickt dabei gleichsam in ein Fernrohr, sodass für ihn ein nahes, am Display im HUD-Inneren erzeugtes Anzeigebild in der Ferne vor dem Kraftfahrzeug erscheint. Damit sind entsprechend einer "Öffnung des Fernrohrs" nur begrenzte Raumwinkel darstellbar, in denen das HUD-Bild dem Blick durch die Frontscheibe überlagert werden kann. Kontaktanaloge Einblendungen, wie beispielsweise aus Augmented-Reality bekannt, sind außerhalb dieses begrenzten Raumwinkels des virtuellen HUD-Anzeigebilds nicht möglich. Blickfeldanzeigevorrichtungen und Verfahren zu deren Betrieb sind bekannt, beispielsweise aus US 2018/188530 A1.

Andererseits ist beispielsweise aus DE 10 2009 054 232 A1 ein Head-up-Display zur stereoskopischen Informationsanzeige in einem Kraftfahrzeug bekannt, das Bilderzeugungsmittel zur Erzeugung zweier unterschiedlicher, für die beiden Augen eines Insassen bestimmter Einzelbilder und eine Anzeigeeinheit aufweist, auf welcher Leuchtpunkte erzeugbar sind, deren Lichtstrahlen durch Spiegelung an der Windschutzscheibe des Kraftfahrzeugs für den Insassen sichtbar sind. Ferner sind im Strahlengang zwischen der Anzeigeeinheit und der Windschutzscheibe Ablenkmittel, wie z. B. eine matrixartige Anordnung kleiner Linsen, vorgesehen, die Lichtstrahlen unterschiedlicher Leuchtpunkte in unterschiedliche Abstrahlrichtungen ablenken. Zudem sind Bildpunktzuordnungsmittel zur Zuordnung von Bildpunkten der Einzelbilder zu Leuchtpunkten der Anzeigeeinheit vorgesehen. Die gegenseitige Anordnung der genannten Bauelemente und die genannte Zuordnung sind derart, dass für das linke Auge des Insassen das für das linke Auge bestimmte Einzelbild sichtbar ist und für das rechte Auge des Insassen das für das rechte Auge bestimmte Einzelbild sichtbar ist. Eine stereoskopische Informationsanzeige kann für eine kontaktanaloge Darstellung der Inhalte besonders günstig sein.

Bei Blickfeldanzeigevorrichtungen sind in der Regel zusätzliche Maßnahmen vorgesehen, die Störreflexionen von Umgebungslicht an deren Bauteilen, die zu einer Blendung des Benutzers führen könnten, unterbinden. Hierzu wird bei einem herkömmlichen HUD beispielsweise eine Deckscheibe, die die Projektionseinheit nach außen verschließt, geometrisch entspiegelt (sogenannte Glaretrap). Daraus bekannte Entspiegelungstechniken eignen sich allerdings nicht für ein direkt gegenüber der Windschutzscheibe angeordnetes Display.

Ein weiteres Problem ist die Entstehung zueinander versetzter Doppelbilder im virtuellen Anzeigebild durch Doppelreflexion des Projektionslichts an zwei optischen Grenzflächen der Projektionsscheibe. Als Gegenmaßnahme ist es z. B. für ein horizontal schmales Field-of-View bekannt, die zwei optischen Grenzflächen der Projektionsscheibe mittels einer Keilfolie vertikal zueinander geneigt auszubilden, um Doppelbilder horizontaler Bildelementkanten versatzlos zu überlagern.

Es ist Aufgabe der vorliegenden Erfindung, eine im Hinblick auf die Überwindung zueinander versetzter Doppelbilder verbesserte Lösung für eine Blickfeldanzeigevorrichtung, insbesondere für ein Kraftfahrzeug, bereitzustellen, die sich insbesondere auch bei einem großen Field-of-View gut eignet.

### Offenbarung der Erfindung

Diese Aufgabe wird durch ein Verfahren zum Betreiben einer Blickfeldanzeigevorrichtung gemäß Anspruch 1, eine entsprechende Steuerungseinheit, ein Computerprogramm sowie ein Kraftfahrzeug gemäß den nebengeordneten Ansprüchen gelöst. Weitere Ausgestaltungen sind in den abhängigen Ansprüchen angegeben. Alle in den Ansprüchen und der Beschreibung für das Verfahren genannten weiterführenden Merkmale und Wirkungen gelten auch in Bezug auf die Blickfeldanzeigevorrichtung, die Steuerungseinheit, das Computerprogramm oder das Kraftfahrzeug, wie auch umgekehrt.

Gemäß einem ersten Aspekt ist ein Verfahren zum Betreiben einer Blickfeldanzeigevorrichtung, insbesondere für ein Kraftfahrzeug, vorgesehen. Die Blickfeldanzeigevorrichtung ist dazu ausgebildet, ein Projektionslichtstrahlenbündel mit einem Anzeigeinhalt zu erzeugen und auf eine teilweise transparente reflektierende Projektionsscheibe, insbesondere eine Frontscheibe des Kraftfahrzeugs, derart zu projizieren, dass dahinter ein in ein Blickfeld eines Benutzers (z. B. des Fahrers oder eines anderen Insassen des Kraftfahrzeugs) eingeblendetes virtuelles Anzeigebild erzeugt wird. Das Verfahren umfasst folgende Schritte:
- Ermitteln vertikaler oder eine vertikale Komponente aufweisender Bildelementkanten (insbesondere auch Linien) im einzublendenden virtuellen Anzeigebild und
- Verkippen der ermittelten vertikalen oder eine vertikale Komponente aufweisenden Bildelementkanten zu einem jeweils derart angepassten Kippwinkel bezüglich der Vertikalen, dass sich durch Doppelreflexion des Projektionslichtstrahlenbündels an zwei optischen Grenzflächen der Projektionsscheibe (z. B. deren vorderen und hinteren Oberfläche) hervorgerufene, horizontal zueinander versetzte Doppelbilder der jeweiligen Bildelementkanten im virtuellen Anzeigebild für den Benutzer überlagern und damit im Wesentlichen scharf erscheinen. (Der Begriff "im Wesentlichen" kann hierin insbesondere eine herstellungs- oder konstruktionsbedingte mögliche Abweichung im Rahmen des dargelegten Funktionsprinzips bedeuten, die beispielsweise nicht mehr als etwa 10% von betreffenden geeigneten Messgrößen betragen kann.)

Es wird ferner eine aktuelle Position, insbesondere eine Augenposition oder Blickachse, des Benutzers bereitgestellt und der jeweilige angepasste Kippwinkel wird abhängig von der bereitgestellten aktuellen Position des Benutzers ermittelt.

Es kann sich dabei grundsätzlich auch um eine herkömmliche Blickfeldanzeigevorrichtung, beispielsweise der eingangs beschriebenen Art, handeln. Insbesondere nützlich ist aber das Verfahren für Blickfeldanzeigevorrichtungen mit horizontal breitem nutzbarem Raumwinkel (hierin auch Field-of-View genannt) innerhalb des Blickfelds eines Benutzers der Blickfeldanzeigevorrichtung. In diesem Fall können nämlich durch die genannte Doppelreflexion ohne Gegenmaßnahmen horizontal zueinander versetzte Doppelbilder vertikaler und schräger Bildelementkanten im virtuellen Anzeigebild störend sein. Das ist nicht so leicht durch eine eingangs erwähnte Keilfolie ähnlich wie bei horizontalen Bildelementkanten auszugleichen, da ein horizontaler Keil bei einem Field-of-View von beispielsweise einer halben Frontscheibenlänge recht massiv zum Beifahrer hin ausfallen würde.

Daher wird vorliegend stattdessen vorgeschlagen, die Doppelbilder vertikaler Bildelementkanten durch deren Ausrichten zu einem jeweils derart angepassten Kippwinkel zum Überlagern zu bringen, bei dem sie für den Benutzer im virtuellen Anzeigebild zwar leicht aus der Vertikalen gekippt, dafür aber als scharfe Linien bzw. Kanten erscheinen. Das Gleiche ist auch auf schräge Bildelementkanten, insbesondere geradlinig mit vertikalen Komponenten, anwendbar.

Das Prinzip kann beispielsweise auf Symbole (Blockpfeile, Kästchen etc.) und/oder auf Schriftzeichen angewandt werden. Beispielsweise kann im Rahmen der Bilderzeugung ein geeigneter Rechenalgorithmus automatisch vertikal oder mit vertikaler Komponente darzustellende Bildelementkanten ermitteln, den jeweiligen angepassten Kippwinkel berechnen und den vom Projektionslichtstrahlenbündel zu transportierenden Anzeigeinhalt entsprechend anpassen.

Gemäß einer Variante des Verfahrens wird eine Blickachse des Benutzers als seine aktuelle Position bereitgestellt und der jeweilige angepasste Kippwinkel abhängig von einem Abstand der jeweiligen ermittelten vertikalen oder eine vertikale Komponente aufweisenden Bildelementkante von der Blickachse des Benutzers, ermittelt. Dadurch kann das Verfahren beispielsweise weiter vereinfacht und/oder präzisiert werden.

Bei einer spezifischen Ausgestaltung weist die Projektionsscheibe zusätzlich zur Vermeidung vertikal zueinander versetzter, durch Doppelreflexion des Projektionslichtstrahlenbündels an den zwei optischen Grenzflächen hervorgerufener Doppelbilder horizontaler oder eine horizontale Komponente aufweisender Bildelementkanten ein zwischen den zwei optischen Grenzflächen angeordnetes Neigungselement, insbesondere eine Keilfolie, auf, das zur Überlagerung vertikal versetzter Doppelbilder im einzublendenden virtuellen Anzeigebild ausgebildet ist.

Alternativ oder zusätzlich dazu können vertikal zueinander versetzte Doppelbilder horizontaler oder eine horizontale Komponente aufweisender Bildelementkanten im einzublendenden virtuellen Anzeigebild für den Benutzer dadurch kaschiert werden, dass die jeweiligen Bildelemente mit einer horizontale Komponenten aufweisenden Textur versehen werden.

Gemäß einer Ausführungsform umfasst die Blickfeldanzeigevorrichtung:
- eine elektrisch ansteuerbare flächige Pixelanordnung, insbesondere einen oder mehrere Flachbildschirme oder eine andersartige zweidimensionale Pixelmatrix, zur Erzeugung des Projektionslichtstrahlenbündels mit einem Anzeigeinhalt und
- eine auf der flächigen Pixelanordnung angeordnete reflexunterdrückende Umlenkanordnung, umfassend eine oder mehrere sich entlang der flächigen Pixelanordnung in einem vorbestimmten spitzen Winkel dazu und parallel zueinander erstreckende ebene Reflexionsfläche(n) zum Projizieren des erzeugten Projektionslichtstrahlenbündels auf die Projektionsscheibe.

Dabei ist/sind die Rückseite(n) der einen oder der mehreren Reflexionsfläche(n) zu einer Störreflexunterdrückung lichtabsorbierend ausgebildet.

Im Gegensatz zu der eingangs erwähnten herkömmlichen HUD-Bauart mit einer im Inneren der Instrumententafel eines Kraftfahrzeugs untergebrachten Projektionsoptik hat eine Blickfeldanzeigevorrichtung gemäß dieser Ausführungsform einen deutlich flacheren Aufbau und kann beispielsweise mit nur wenigen cm Einbautiefe in einer Oberseite der Instrumententafel eingebaut oder nachträglich darauf montiert werden. Dies macht eine signifikante Erweiterung des Field-of-View der Blickfeldanzeigevorrichtung, beispielsweise auch vertikal deutlich über den Horizont hinaus, möglich, was sich insbesondere für kontaktanaloge Darstellungen für den Fahrer und andere Insassen zur Unterstützung der Navigation oder beim autonomen Fahren eignet. Insbesondere ist damit ein echt kontaktanaloger 3D-Effekt (Stereo-Augmented-Reality) möglich.

Der Begriff "flächig" bedeutet dabei ganz allgemein, dass sich die Pixelanordnung über eine Fläche erstreckt, die zumindest bereichsweise eben oder aber gekrümmt oder gewölbt sein kann. Insbesondere kann die flächige Pixelanordnung bei Bedarf einer Wölbung der Oberseite der Instrumententafel eines Kraftfahrzeugs angepasst sein, beispielsweise indem sie gestuft oder geschachtelt aus mehreren kleineren Teilflächen, wie z. B. ebenen Displays, aufgebaut ist.

Die mehreren zueinander parallelen Reflexionsflächen der reflexunterdrückenden Umlenkanordnung können untereinander gleich ausgebildet sein oder aber sich in deren Form oder Größe voneinander unterscheiden. Abhängig von deren Form und Größe kann deren Abstand voneinander in einer zu deren Erstreckungsrichtung senkrechten Richtung derart gewählt sein, dass eine nahezu vollständige Störreflexunterdrückung und eine im Wesentlichen verlustfreie und formerhaltende Umlenkung des Projektionslichtstrahlenbündels gewährleistet sind. Einige Beispiele hierfür sind weiter unten angegeben. Für die Rückseiten der Reflexionsflächen ist grundsätzlich jede an sich bekannte sonnenlichtabsorbierende Beschichtung geeignet, beispielsweise eine matte schwarze Schicht.

Gemäß einer Weiterbildung dieser Ausführungsform ist mindestens eine der Reflexionsflächen der reflexunterdrückenden Umlenkanordnung durch eine Mantelflächenseite eines auf der flächigen Pixelanordnung angeordneten Prismas, insbesondere mit einer dreieckigen Querschnittsfläche, gebildet. Dies kann der jeweiligen Reflexionsfläche insbesondere eine hohe mechanische Stabilität verleihen. Das Prisma kann aus jedem für das verwendete Projektionslicht transparenten Material, insbesondere Glas oder Kunststoff, gefertigt sein. Bei einer Luftschicht zwischen der Reflexionsfläche und deren lichtabsorbierender Rückseite kann die Reflexion durch Totalreflexion an der genannten Mantelflächenseite des Prismas zustande kommen, andernfalls können darauf eine reflektierende Schicht, beispielsweise aus Metall, und auf dieser eine lichtabsorbierende Schicht aufgebracht sein.

Bei einer spezifischen Ausgestaltung ist für jeweils zwei benachbarte Reflexionsflächen eine Lichtaustrittsebene, die eine obere Kante der einen Reflexionsfläche und die untere Kante der Rückseite der nächsten Reflexionsfläche verbindet, im Betrieb der Blickfeldanzeigevorrichtung im Wesentlichen senkrecht zu der Projektionsscheibe ausgerichtet. Dies kann insbesondere zu einer vollständigen Störreflexunterdrückung für Umgebungslicht aus beliebigen Richtungen führen.

Bei einer spezifischen Ausgestaltung liegen obere Kanten der mehreren zueinander parallelen Reflexionsflächen der reflexunterdrückenden Umlenkanordnung aus der Sicht des Benutzers im Wesentlichen auf einer Linie, um beispielsweise die Reflexionsflächen gegen einen direkten Blick des Benutzers darauf zu verdecken. Dies kann insbesondere mittels einer geeigneten Hub-/Kipp-Einrichtung für die reflexunterdrückende Umlenkanordnung oder die flächige Pixelanordnung manuell oder zumindest teilweise automatisiert, beispielsweise durch das Eye-Tracking, einstellbar sein. Hierzu kann das Verfahren insbesondere folgende zusätzliche Schritte umfassen:
- Bereitstellen einer aktuellen Position, insbesondere einer Augenposition oder einer Blickrichtung, des Benutzers und
- Ausrichten oberer Kanten der mehreren zueinander parallelen Reflexionsflächen der reflexunterdrückenden Umlenkanordnung im Wesentlichen in eine zu den Augen des Benutzers führende Linie abhängig von der bereitgestellten aktuellen Benutzerposition.

Bei einer spezifischen Ausgestaltung umfasst die flächige Pixelanordnung mindestens einen autostereoskopischen Bildschirm und/oder mindestens einen 2D-Bildschirm und das Verfahren umfasst die weiteren Schritte:
- Erfassen eines aktuellen Umfelds hinter der Projektionsscheibe, insbesondere eines vorausliegenden Umfelds des Kraftfahrzeugs; und
- Einblenden kontaktanaloger Informationen, insbesondere virtueller Objektbilder und/oder Objektmarkierungen, in das Blickfeld des Benutzers über den mindestens einen autostereoskopischen Bildschirm und/oder den mindestens einen 2D-Bildschirm abhängig von dem erfassten Umfeld, insbesondere zur Unterstützung des Benutzers bei der Navigation oder zur Verdeutlichung einer Fahrsituation beim hoch- oder vollautomatisierten Fahren (HAF/VAF).

Bei einer weiteren spezifischen Ausgestaltung gemäß der obigen Ausführungsform weist die Blickfeldanzeigevorrichtung zusätzlich auch eine Projektionseinheit der eingangs erwähnten herkömmlichen Art zum Erzeugen eines in ein Blickfeld des Benutzers eingeblendeten weiteren virtuellen Anzeigebilds auf (hierin als Hybridansatz bezeichnet). D. h. die Projektionseinheit umfasst in ihrem Inneren sowohl eine Bildgebungseinheit zum Erzeugen eines weiteren Projektionslichtstrahlenbündels mit einem weiteren Anzeigeinhalt als auch eine gegenüber der Bildgebungseinheit angeordnete Projektionsoptik zum Projizieren des erzeugten weiteren Projektionslichtstrahlenbündels auf eine Teilfläche der Projektionsscheibe. Dabei ist die flächige Pixelanordnung mit der darauf angeordneten reflexunterdrückenden Umlenkanordnung beispielsweise neben einer Lichtaustrittsöffnung der Projektionseinheit, insbesondere unmittelbar an diese anschließend und/oder um diese herum und/oder bündig zu deren Rand, angeordnet. Dadurch können die herkömmliche HUD-Technologie mit der obigen kombiniert werden, um je nach Situation gleichzeitig oder abwechselnd genutzt zu werden (hierin auch als Hybridansatz bezeichnet). Das Verfahren umfasst dabei die weiteren Schritte:
- Bereitstellen von Systemzustandsdaten eines sich bewegenden übergeordneten Systems (insbesondere eines Kraftfahrzeugs), in dem die Blickfeldanzeigevorrichtung montiert ist, und/oder Bereitstellen von Streckendaten für einen vorausliegenden Streckenabschnitt; und
- statisches, insbesondere von realen Objekten hinter der Projektionsscheibe in der Darstellung unabhängiges, Einblenden vorbestimmter Informationen in das Blickfeld des Benutzers über die Projektionseinheit und/oder den mindestens einen autostereoskopischen Bildschirm und/oder den mindestens einen 2D-Bildschirm der flächigen Pixelanordnung abhängig von den bereitgestellten Systemzustandsdaten und Streckendaten.

Bei den vorbestimmten statischen Informationen kann es sich beispielsweise um Warnmeldungen bei einem kritischen Ladezustand eines Energiespeichers oder einem kritischen Füllzustand eines Kraftstofftanks an Bord oder einem aufkommenden Unwetter oder um eine Anzeige einer aktuell vorliegenden Geschwindigkeitsbegrenzung oder deren Überschreiten etc. handeln.

Gemäß einem weiteren Aspekt ist ein Computerprogramm vorgesehen, welches, wenn es in einer Steuerungseinheit ausgeführt wird, dazu eingerichtet ist, ein Verfahren der hierin dargelegten Art auszuführen.

Gemäß einem weiteren Aspekt ist eine Steuerungseinheit für eine Blickfeldanzeigevorrichtung vorgesehen, wobei die Steuerungseinheit zum Durchführen eines Verfahrens der hierin dargelegten Art ausgebildet ist.

Gemäß einem weiteren Aspekt ist ein Kraftfahrzeug vorgesehen, umfassend:
- eine sich zwischen einer Frontscheibe des Kraftfahrzeugs und einer Instrumententafel erstreckende Oberseite der Instrumententafel;
- eine auf, in oder unter der Oberseite der Instrumententafel angeordnete Blickfeldanzeigevorrichtung zum Einblenden eines virtuellen Anzeigebilds in ein Blickfeld des Fahrers und/oder weiterer Insassen, bei der insbesondere eine elektrisch ansteuerbare flächige Pixelanordnung der obigen Art oder eine darauf angeordnete reflexunterdrückende Umlenkanordnung der obigen Art im Wesentlichen bündig zu der Oberseite der Instrumententafel angeordnet ist.

Dabei umfasst das Kraftfahrzeug ferner eine Steuerungseinheit der hierin dargelegten Art.

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind rein schematisch, sie sind insbesondere nicht als maßstabsgetreu zu lesen. Ähnliche oder einander entsprechende Elemente sind darin mit den gleichen Bezugszeichen versehen. Es zeigen:
- Figur 1: eine schematische seitliche Querschnittsansicht einer Blickfeldanzeigevorrichtung gemäß der obigen Ausführungsform der Erfindung;
- Figur 2a: eine perspektivische Ansicht einer möglichen Erstreckung einer Blickfeldanzeigevorrichtung gemäß der obigen Ausführungsform in einer Oberseite einer Instrumententafel eines Kraftfahrzeugs;
- Figuren 2b und 2d: jeweils eine perspektivische Ansicht eines mit der Blickfeldanzeigevorrichtung der Fig. 2a nutzbaren Projektionsbereichs in der Frontscheibe des Kraftfahrzeugs aus Fahrersicht;
- Figur 2c: eine perspektivische Ansicht eines mit der Blickfeldanzeigevorrichtung der Fig. 2a nutzbaren Projektionsbereichs in der Frontscheibe des Kraftfahrzeugs aus Beifahrersicht;
- Figuren 3a bis 3c: perspektivische Ansichten eines Modellbeispiels einer Blickfeldanzeigevorrichtung gemäß der obigen Ausführungsform zur Erläuterung der Umlenkwirkung von deren reflexunterdrückender Umlenkanordnung mit mehreren Prismen;
- Figuren 4a und 4b: perspektivische Ansichten eines weiteren Modellbeispiels einer Blickfeldanzeigevorrichtung gemäß der obigen Ausführungsform zur Erläuterung der Entstehung sichtbarer und unsichtbarer Streifen in einer die flächige Pixelanordnung enthaltenden Fläche;
- Figur 5a: eine perspektivische Ansicht einer möglichen Anordnung einer Blickfeldanzeigevorrichtung gemäß der obigen Ausführungsform in einer Oberseite einer Instrumententafel eines Kraftfahrzeugs;
- Figur 5b: eine perspektivische Ansicht eines mit der Blickfeldanzeigevorrichtung der Fig. 5a nutzbaren Projektionsbereichs in der Frontscheibe des Kraftfahrzeugs aus Fahrersicht mit einem kontaktanalog eingeblendeten virtuellen Abbiegepfeil;
- Figur 6: eine schematische seitliche Querschnittsansicht einer Blickfeldanzeigevorrichtung gemäß der obigen Ausführungsform mit Ansteuerungskomponenten für deren flächige Pixelanordnung zur Erzeugung eines echt kontaktanalogen 3D-Effekts beim Benutzer;
- Figur 7: eine perspektivische Frontscheibenansicht aus Fahrersicht mit einer mit der Blickfeldanzeigevorrichtung der Fig. 6 kontaktanalog eingeblendeten virtuellen Markierung eines Fremdfahrzeugs;
- Figur 8: eine weitere perspektivische Frontscheibenansicht aus Fahrersicht mit einer mit der Blickfeldanzeigevorrichtung der Fig. 6 kontaktanalog eingeblendeten virtuellen Markierung einer Fahrspur und einem mittels einer zusätzlichen herkömmlichen Projektionseinheit statisch eingeblendeten weiteren virtuellen Anzeigeinhalt;
- Figuren 9a und 9b: schematische seitliche Querschnittsansichten weiterer Blickfeldanzeigevorrichtungen gemäß der obigen Ausführungsform;
- Figur 10: einen Blick durch eine Frontscheibe aus Fahrersicht mit Beispielen virtueller Anzeigebilder, die von einer Blickfeldanzeigevorrichtung mit und ohne das erfindungsgemäße Verfahren erzeugt wurden; und
- Figur 11: einen Blick durch eine Frontscheibe mit einem weiteren Beispiel durch das erfindungsgemäße Verfahren von einer Blickfeldanzeigevorrichtung erzeugter scharfer vertikaler Linien im virtuellen Anzeigebild.

### Beschreibung von Ausführungsformen

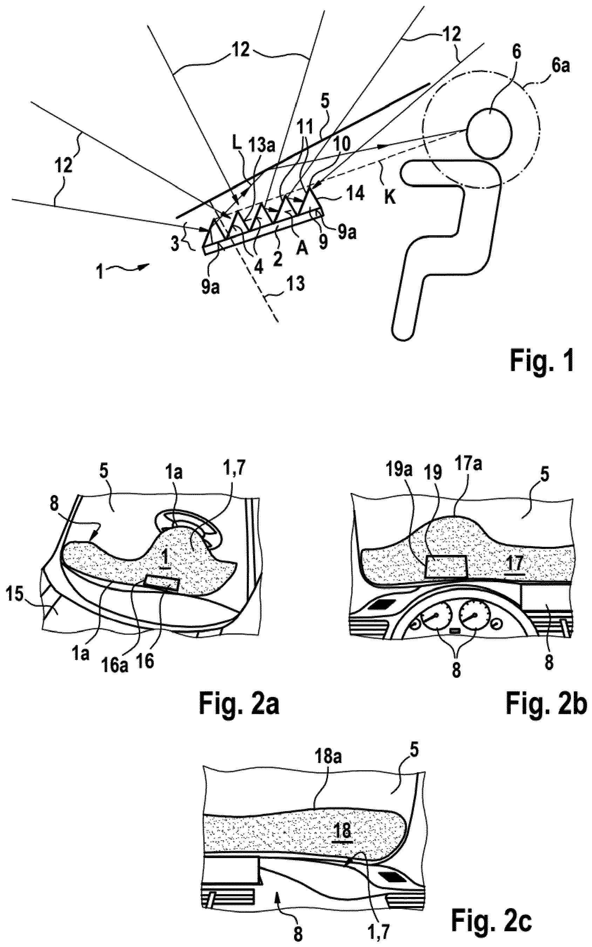

Alle weiter oben und nachfolgend in der Beschreibung und den Ansprüchen genannten spezifischen Details und Varianten des Betriebsverfahrens für eine Blickfeldanzeigevorrichtung gemäß dem ersten Aspekt der Erfindung, insbesondere verschiedene Ausgestaltungsmerkmale der betreffenden Blickfeldanzeigevorrichtung gemäß der obigen Ausführungsform, können bei den in den Figuren 1 bis 11 gezeigten Beispielen implementiert sein. Umgekehrt sind die in Fig. 1 bis 11 gezeigten konkreten Beispiele nur als eine vereinfachte, veranschaulichende Illustration der in der Beschreibung und den Ansprüchen allgemeiner definierter Merkmale zu verstehen.

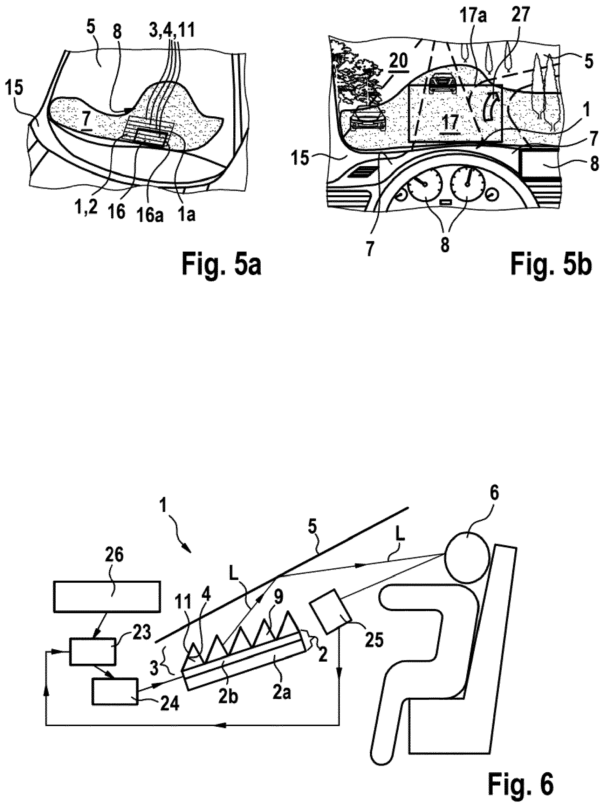

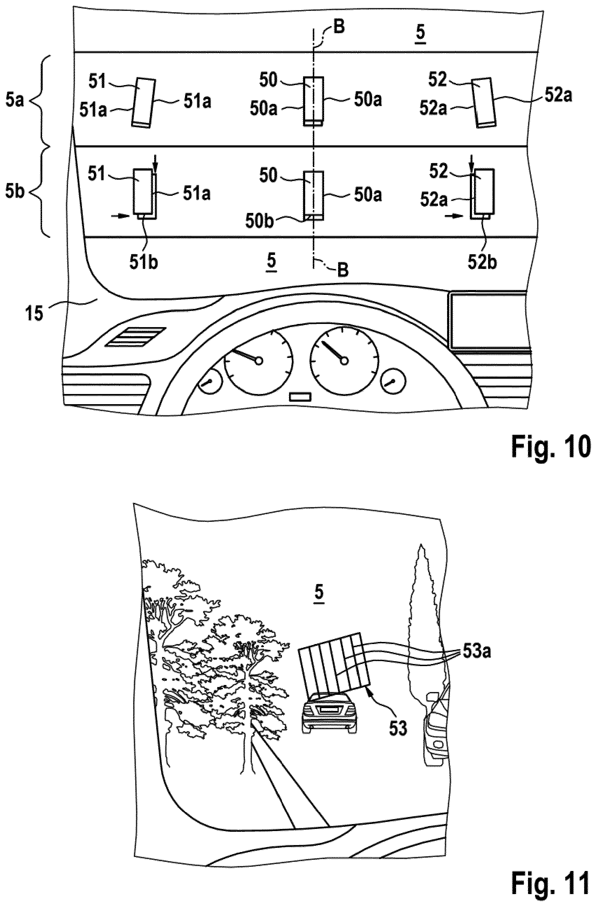

Fig. 1 zeigt in einer stark vereinfachten schematischen vertikalen Querschnittsansicht eine Blickfeldanzeigevorrichtung 1 gemäß der obigen Ausführungsform der Erfindung in einem Kraftfahrzeug (in Fig. 1 nicht dargestellt, vgl. Fig. 2a-2d und 5a-5b), insbesondere ein Head-up-Display. Das erfindungsgemäße Verfahren wird weiter unten mit Bezug auf Fig. 10 und 11 erläutert.

Die Blickfeldanzeigevorrichtung 1 umfasst eine elektrisch ansteuerbare flächige Pixelanordnung 2, die im Betrieb ein Projektionslichtstrahlenbündel L mit einem gewünschten Anzeigeinhalt erzeugt. Ferner umfasst die Blickfeldanzeigevorrichtung 1 eine auf der flächigen Pixelanordnung 2 angeordnete reflexunterdrückende Umlenkanordnung 3, die in diesem Beispiel mehrere (rein beispielhaft fünf) sich entlang der flächigen Pixelanordnung 2 in einem vorbestimmten spitzen Winkel dazu und parallel zueinander erstreckende ebene Reflexionsflächen 4 aufweist. Durch das Umlenken des Projektionslichtstrahlenbündels L an den Reflexionsflächen 4 wird es auf eine Frontscheibe 5 des Kraftfahrzeugs projiziert und von dieser zu den Augen eines Benutzers 6, insbesondere des Fahrers oder Beifahrers, reflektiert (durch Pfeile angedeutet). Dadurch entsteht hinter der Frontscheibe 5 ein in ein Blickfeld des Benutzers 6 eingeblendetes virtuelles Anzeigebild (vgl. Fig. 5b, 7 und 8), das sich für den Benutzer 6 mit einem durch die Frontscheibe 5 beobachteten realen Umfeld vor dem Kraftfahrzeug überlagert. Der vorbestimmte spitze Anstellwinkel der Reflexionsflächen 4 kann hierzu anwendungsspezifisch beispielsweise aus der gegenseitigen geometrischen Anordnung der flächigen Pixelanordnung 2, der Frontscheibe 5 und des Benutzers 6 festgelegt sein. Dabei sind die Reflexionsflächen 4 auf deren Rückseiten 11 zu einer Störreflexunterdrückung vollflächig lichtabsorbierend ausgebildet.

Die Blickfeldanzeigevorrichtung 1 kann beispielsweise in oder auf einer Oberseite 7 einer Instrumententafel 8 (in Fig. 1 nicht dargestellt, vgl. Fig. 2a-2d und 5a) des Kraftfahrzeugs zwischen der Frontscheibe 5 und der Instrumententafel 8 bzw. einem Lenkrad montiert sein. Dabei kann die flächige Pixelanordnung 2 oder die reflexunterdrückende Umlenkanordnung 3 zumindest abschnittweise beispielsweise im Wesentlichen bündig zu der Oberseite 7 der Instrumententafel 8 angeordnet sein, was besonders unauffällig, schützend für die optischen Bauteile oder den Benutzer 6 und/oder platzsparend sein kann.

In Fig. 1 sind rein beispielhaft alle Reflexionsflächen 4 der reflexunterdrückenden Umlenkanordnung 3 durch Mantelflächenseiten von auf der flächigen Pixelanordnung 2 aufliegenden Prismen 9 aus Glas oder Kunststoff gebildet. Dies kann einen besonders robusten Aufbau der Blickfeldanzeigevorrichtung 1 ergeben und sowohl die flächige Pixelanordnung 2 und die Reflexionsflächen 4 vor Beschädigungen als auch den Benutzer 6 vor Verletzungen an freistehenden Kanten schützen. Insbesondere können hierzu die freistehenden, oberen Prismenkanten 10 zusätzlich abgerundet oder abgefast und insbesondere ebenfalls lichtabsorbierend ausgebildet sein, beispielsweise in ähnlicher Weise wie die Rückseiten der Reflexionsflächen und zu demselben Zweck.

Insbesondere hat das jeweilige Prisma 9 in Fig. 1 eine dreieckige Querschnittsfläche A, sodass dessen andere, untere Mantelflächenseite 9a auf der flächigen Pixelanordnung 2 aufliegt, während dessen dritte Mantelflächenseite als Lichtaustrittsfläche 13a für das umgelenkte Projektionslichtstrahlenbündel L dient. Die Lichtaustrittsflächen 13a können insbesondere von außen mit einer geeigneten Antireflex-Beschichtung versehen sein. In Fig. 1 schließen die auf der flächigen Pixelanordnung 2 aufliegenden Mantelflächenseiten 9a der Prismen 9 rein beispielhaft direkt aneinander an.

Bei der in Fig. 1 gezeigten geometrischen Anordnung der Reflexionsflächen 4 kann durch deren lichtabsorbierende Rückseiten 11 insbesondere eine nahezu vollständige Unterdrückung von Störreflexen des Umgebungslichts 12 aus beliebigen Richtungen von außerhalb und innerhalb des Kraftfahrzeugs erreicht werden, wie in Fig. 1 symbolisch durch einen störreflexfreien Bereich 6a um den Benutzer 6 herum angedeutet. Hierzu können beispielsweise Lichtaustrittsebenen 13, die für jeweils zwei benachbarte Reflexionsflächen 4 eine obere Kante der einen Reflexionsfläche und die untere Kante der Rückseite 11 der nächsten Reflexionsfläche verbinden und in denen in diesem Beispiel die Lichtaustrittsflächen 13a der Prismen 9 liegen, im Wesentlichen senkrecht zu der Frontscheibe 5 ausgerichtet sein. Insbesondere liegen in diesem Beispiel die Reflexionsflächen 4 und deren lichtabsorbierende Rückseiten 11 mit deren unteren Kanten unmittelbar auf der flächigen Pixelanordnung 2 auf, die bei Bedarf auch eine schützende Deckschicht etc. umfassen kann.

Ferner ist in Fig. 1 eine vordere, am nächsten an dem Benutzer 6 liegende Reflexionsfläche 4 zur Vorbeugung einer Blendung des Benutzers daran durch eine abgedunkelte oder lichtabsorbierende Abdeckfläche 14 in Blickrichtung des Benutzers 6 abgedeckt. Die Abdeckfläche 14 bedeckt in diesem Beispiel eine dem Benutzer 6 zugewandte Mantelflächenseite des vorderen Prismas 9. Für die Abdeckfläche 14 eignet sich insbesondere die gleiche Beschichtung, beispielsweise eine schwarze matte Beschichtung, wie bei den lichtabsorbierenden Rückseiten 11 der Reflexionsflächen 4. Alternativ kann zum selben Zweck auch eine separate, in Richtung des Benutzers vor der vorderen Reflexionsfläche 4 angeordnete Abdeckfläche vorgesehen sein, sodass die genannte Reflexionsfläche 4 zur Umlenkung des Projektionslichts nutzbar ist.

Des Weiteren liegen in Fig. 1 obere Kanten der Reflexionsflächen 4 rein beispielhaft im Wesentlichen auf einer Linie K aus der Sicht des Benutzers 6 der Blickfeldanzeigevorrichtung 1.

Fig. 2a zeigt schematisch eine perspektivische Ansicht einer möglichen Erstreckung einer Blickfeldanzeigevorrichtung 1 gemäß der obigen Ausführungsform der Erfindung, insbesondere gemäß Fig. 1, in einer Oberseite 7 einer Instrumententafel 8 eines Kraftfahrzeugs 15. Eine Gesamthöhe der Blickfeldanzeigevorrichtung 1 in einer zu der flächigen Pixelanordnung 2 senkrechten Richtung kann insbesondere nur wenige cm, beispielsweise zwischen 0,5 und 10 cm, insbesondere zwischen 1 und 7 cm, z. B. etwa 2, 3, 4, 5 oder 6 cm betragen. Aufgrund einer entsprechend geringen Einbautiefe der Blickfeldanzeigevorrichtung 1 kann sie grundsätzlich eine gesamte Fläche der Oberseite 7 der Instrumententafel 8 des Kraftfahrzeugs 15 vor der Frontscheibe 5 einnehmen, wie in Fig. 2a durch deren mögliche Kontur 1a angedeutet. Zum Vergleich ist in Fig. 2a eine Lichtaustrittsöffnung 16 und deren Rand 16a bei einer eingangs erwähnten herkömmlichen Projektionseinheit eines HUDs mit unterhalb der Oberseite 7 der Instrumententafel 8 untergebrachter Projektionsoptik (nicht gezeigt) angedeutet.

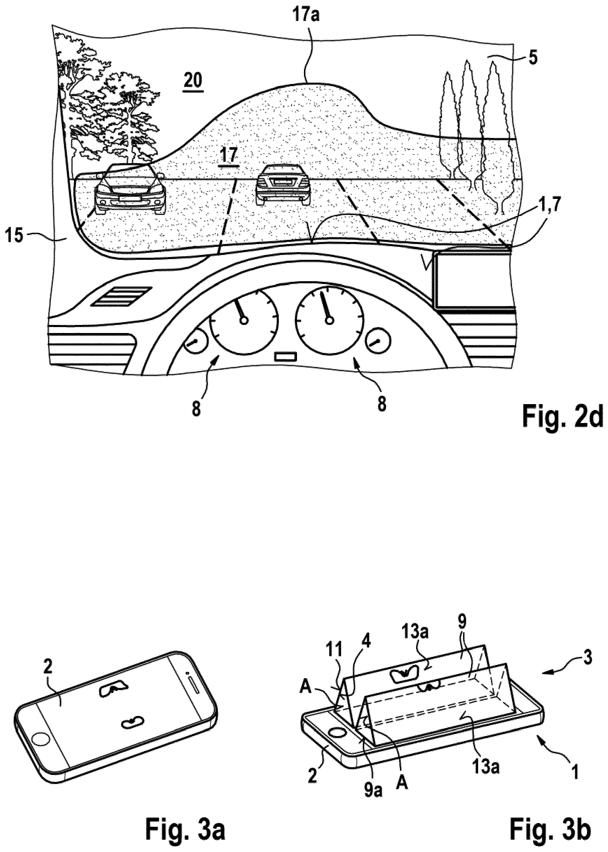

Fig. 2b und 2d zeigen jeweils schematisch eine perspektivische Ansicht eines mit der Blickfeldanzeigevorrichtung 1 der Fig. 2a nutzbaren Projektionsbereichs 17 der Frontscheibe 5 des Kraftfahrzeugs 15 aus Fahrersicht, dessen Begrenzung 17a der Kontur 1a der Blickfeldanzeigevorrichtung 1 entspricht. Wiederum sind zum Vergleich ein der Lichtaustrittsöffnung 16 einer herkömmlichen Projektionseinheit entsprechender Projektionsbereich 19 und dessen Begrenzung 19a angedeutet. Im Gegensatz dazu kann der mit der Blickfeldanzeigevorrichtung 1 nutzbare Projektionsbereich 17 nach oben erkennbar deutlich über den Horizont hinaus reichen, und auch seitlich einen Großteil des vom Fahrer zu überblickenden Straßenbereichs vor der Frontscheibe 5 abdecken.

Fig. 2c zeigt schematisch eine perspektivische Ansicht eines mit der Blickfeldanzeigevorrichtung 1 der Fig. 2a nutzbaren Projektionsbereichs 18 der Frontscheibe 5 des Kraftfahrzeugs 15 aus Beifahrersicht, dessen Begrenzung 18a der Kontur 1a der Blickfeldanzeigevorrichtung 1 entspricht. Wie daraus leicht zu erkennen ist, sind die vorstehend für den Fahrer genannten Wirkungen der Blickfeldanzeigevorrichtung 1 genauso gut auch für den Beifahrer nutzbar. Ähnliches gilt entsprechend auch für weitere Insassen des Kraftfahrzeugs 15, beispielsweise aus Loungeposition im Fond. Insgesamt ist mit der Blickfeldanzeigevorrichtung 1 daher eine Multi-User-Nutzung möglich. Sofern die Inhalte je nur von einem User gesehen werden sollen, ist über die Auswertung eines Eye-Tracking für alle zu berücksichtigenden User die Pixelmatrix der flächigen Pixelanordnung 2 so anzusteuern, dass das Bild nur von dem betreffenden User gesehen werden kann.

Figuren 3a bis 3c zeigen, jeweils in perspektivischer Ansicht, ein stark vereinfachtes Modellbeispiel für eine Blickfeldanzeigevorrichtung 1 gemäß der obigen Ausführungsform (beispielsweise gemäß der Fig. 1) zur Erläuterung der Umlenkwirkung von deren reflexunterdrückender Umlenkanordnung 3, deren Reflexionsflächen 4 in diesem Modell durch vom Betrachter oder Benutzer abgewandte hintere Mantelflächenseiten zweier Prismen 9 mit dreieckigen Querschnittsflächen A gebildet sind.

Die flächige Pixelanordnung 2 ist in diesem Modellbeispiel als ein Flachbildschirm ausgebildet, der einen gewünschten Anzeigeinhalt, in diesem Beispiel das in Fig. 3a gezeigte zweidimensionale Bild eines Schmetterlings, erzeugt, welches von dem vom Flachbildschirm ausgehenden Projektionslichtstrahlenbündel L (vgl. Fig. 1) transportiert wird. Beim Passieren der auf der flächigen Pixelanordnung 2 angeordneten reflexunterdrückenden Umlenkanordnung 3 wird das Projektionslichtstrahlenbündel L an den Reflexionsflächen 4 der hinteren Mantelflächenseiten der Prismen 9 umgelenkt, um beispielsweise wie in fig. 1 auf die Frontscheibe 5 des Kraftfahrzeugs und von dieser reflektiert zu den Augen des Benutzers 6 zu gelangen.

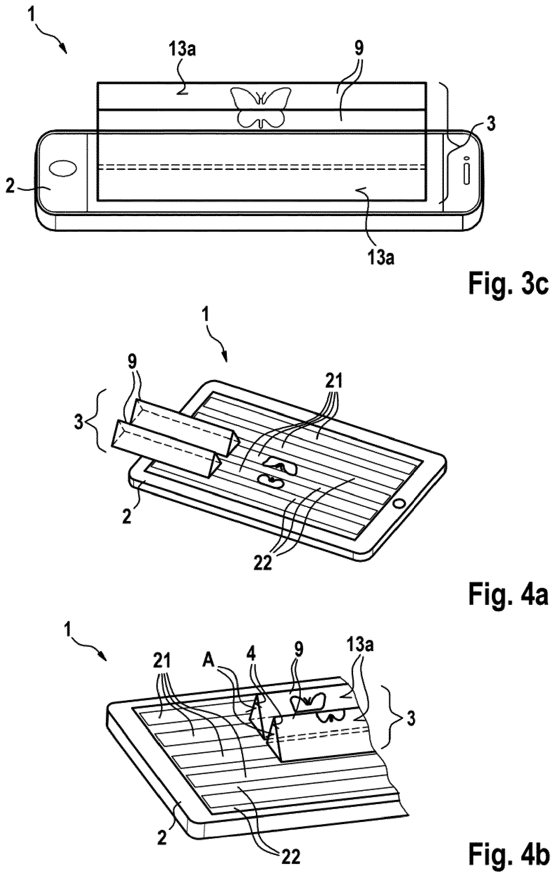

Wie in Fig. 3b zu sehen ist, tritt das durch die unteren Mantelflächenseiten 9a der Prismen 9 eingekoppelte Projektionslichtstrahlenbündel L aus deren Lichtaustrittsflächen 13a aus, während die Rückseiten 11 der Reflexionsflächen 4 zur Störreflexunterdrückung für das Umgebungslicht lichtabsorbierend ausgebildet sind. Wie Fig. 3c zeigt, verlässt das in die reflexunterdrückende Umlenkanordnung 3 eingekoppelte Projektionslichtstrahlenbündel L die Lichtaustrittsflächen 13a der Prismen 9 im Wesentlichen ohne Helligkeitsverlust und bei einer geeigneten Ansteuerung der flächigen Pixelanordnung 2 wie in Fig. 3a auch ohne Formverlust.

Fig. 4a und 4b zeigen jeweils in perspektivischer Ansicht ein weiteres stark vereinfachtes Modellbeispiel einer Blickfeldanzeigevorrichtung 1 gemäß der obigen Ausführungsform (beispielsweise gemäß der Fig. 1) zur Erläuterung der Entstehung sichtbarer und unsichtbarer Streifen in einer die flächige Pixelanordnung 2 enthaltenden Fläche. Ähnlich wie in Fig. 3a-3c ist auch hier die flächige Pixelanordnung 2 als ein Flachbildschirm ausgebildet, der einen gewünschten Anzeigeinhalt, in diesem Beispiel das in Fig. 4a gezeigte zweidimensionale Bild eines Schmetterlings, erzeugt. Auch die auf der flächigen Pixelanordnung 2 angeordnete reflexunterdrückende Umlenkanordnung 3 ist in diesem Modellbeispiel analog zu Fig. 3b-3c durch auf dem Flachbildschirm aufliegende, mit ihren langen Seiten aneinander anschließende Prismen 9 gebildet, von denen auch hier einfachheitshalber nur zwei von möglichen mehr als zwei Prismen gezeigt sind.

Wie in Fig. 4a und 4b extra angedeutet, erstrecken sich in der Pixelfläche zu den Reflexionsflächen 4 der Prismen 9 parallele Streifen 21, die durch die Umlenkung des Projektionslichts an den Reflexionsflächen 4 von hier bis zu fünf identischen Prismen 9 sichtbar für den Benutzer der Blickfeldanzeigevorrichtung 1 gemacht werden können. Dazwischen liegen für den Benutzer der Blickfeldanzeigevorrichtung 1 unsichtbare Streifen 22.

Die unsichtbaren Streifen 22 können daher in der Pixelanordnung schwarz gelassen werden oder aber für anderweitige Funktionen genutzt werden, beispielsweise als Luftauslass für eine Frontscheibenheizung oder Innenraumbelüftung, als Öffnung für eine Soundquelle, als Lichtquelle diffuser Innenraumbeleuchtung oder als Überlappbereich beim Schachteln oder Stufen benachbarter Teilflächen einer zusammengesetzten flächigen Pixelanordnung.

Insbesondere kann hierzu beispielsweise in Fig. 1 eine erste, am weitesten vom Benutzer 6 entfernte Reflexionsfläche 4 auch ohne ein Prisma direkt unter eine Scheibenwurzel der Frontscheibe 5 des Kraftfahrzeugs gesetzt und damit anders als bei frei stehenden Reflexionsflächen sowohl mechanisch als auch gegen mögliche Benutzerverletzungen geschützt sein. Alternativ zum Weglassen eines Prismas 9 können bei dieser und/oder anderen Reflexionsflächen 4 (und nicht nur in diesem Beispiel) Prismenkanten, die den jeweiligen Reflexionsflächen 4 gegenüberliegen, in einem den unsichtbaren Streifen 22 entsprechenden Bereich, der nicht vom Projektionslichtstrahlenbündel L passiert wird, abgeschnitten werden. Dadurch können beispielsweise die unsichtbaren Streifen 22 wie erwähnt anderweitig genutzt werden und/oder das Gewicht und der Materialverbrauch der reflexunterdrückenden Umlenkanordnung reduziert werden.

Fig. 5a zeigt eine perspektivische Ansicht einer möglichen Anordnung einer Blickfeldanzeigevorrichtung 1 gemäß der obigen Ausführungsform (beispielsweise gemäß der Fig. 1) in einer Oberseite 7 einer Instrumententafel 8 eines Kraftfahrzeugs 15. Aufgrund von deren flachem Aufbau kann sich die Blickfeldanzeigevorrichtung 1 entlang der Oberseite 7 der Instrumententafel 8 deutlich über den in Fig. 5a zum Vergleich angedeuteten Rand 16a einer Lichtaustrittsöffnung 16 einer Projektionseinheit der eingangs beschriebenen herkömmlichen HUD-Bauart hinaus erstrecken. Wie für Fig. 2a weiter oben beschrieben, kann die Blickfeldanzeigevorrichtung 1 bis hin zu der Gesamtfläche der Oberseite 7 der Instrumententafel 8 einnehmen.

In Fig. 5a nimmt eine flächige Pixelanordnung 2 der Blickfeldanzeigevorrichtung 1 eine Teilfläche der Oberseite 7 der Instrumententafel 8 des Kraftfahrzeugs 15 vor der Frontscheibe 5 ein, die rein beispielhaft durch eine viereckige Kontur 1a begrenzt ist. Die flächige Pixelanordnung 2 kann insbesondere als ein oder mehrere nebeneinander eben oder verschachtelt oder gestuft angeordnete 2D- oder 3D-Flachbildschirme ausgebildet sein. In Richtung der Frontscheibe 5 ist die flächige Pixelanordnung 2 von einer reflexunterdrückenden Umlenkanordnung 3 überdeckt, deren mehrere zueinander parallele Reflexionsflächen 4 bzw. deren lichtabsorbierende Rückseiten 11 durch parallele Striche angedeutet sind.

Fig. 5b zeigt den mit der Blickfeldanzeigevorrichtung 1 der Fig. 5a nutzbaren Projektionsbereich 17 in der Frontscheibe 5, dessen Begrenzung 17a der Kontur 1a der Blickfeldanzeigevorrichtung 1 entspricht. Der Projektionsbereich 17 reicht nach oben erkennbar deutlich über den Horizont hinaus und deckt auch seitlich mehrere Spuren des vom Fahrer zu überblickenden Straßenbereichs vor dem Kraftfahrzeug 15 ab. Aufgrund des entsprechend großen Raumwinkels oder Field-of-View der Blickfeldanzeigevorrichtung 1 eignet sie sich insbesondere sehr gut für kontaktanaloges Einblenden von virtuellen Hilfsinhalten in das Blickfeld des Fahrers abhängig von dem realen Umfeld 20 vor dem Kraftfahrzeug 15. Insbesondere ist mit der Blickfeldanzeigevorrichtung 1 ein echt kontaktanaloger 3D-Effekt (Stereo Augmented Reality) möglich:

Die flächige Pixelanordnung 2 der Fig. 5a kann hierzu in bekannter Weise, beispielsweise gemäß DE 10 2009 054 232 A1, zur autostereoskopischen oder 3D-Darstellung ausgebildet sein. Eine solche flächige Pixelanordnung 2 kann von einer bilderzeugenden Einheit und/oder einer Steuerungseinheit derart angesteuert werden, dass zwei verschiedene 2D-Bilder das linke und das rechte Auge des Fahrers des Kraftfahrzeugs 15 erreichen, um bei ihm einen räumlichen Eindruck des dargestellten virtuellen Anzeigebilds zu bewirken. Mit einer autostereoskopischen flächigen Pixelanordnung 2 können auf diese Weise als dreidimensional wahrgenommene Darstellungen in beliebigen Entfernungen zwischen ungefähr 1 m und bis hin zu unendlich weit von den Augen des Fahrers erzeugt werden. Dabei sind insbesondere grundsätzlich alle Konvergenzebenen simultan realisierbar, was eine Immersion in eine virtuelle 3D-Welt ermöglicht.

Fig. 6 zeigt eine schematische seitliche Querschnittsansicht einer Blickfeldanzeigevorrichtung 1 gemäß der Fig. 1 und Fig. 2a oder 5a, deren flächige Pixelanordnung 2 in der vorstehend beschriebenen Weise zur autostereoskopischen Darstellung ausgebildet ist. Hierzu weist die flächige Pixelanordnung 2 beispielswiese ein lichtstarkes Display 2a, z. B. einen Flüssigkristallbildschirm oder ein beliebiges anderes, etwa auch beim herkömmlichem HUD einsetzbares Standard-Display, sowie ein darauf aufgebrachtes Mikrolinsenarray 2b oder andersartige Ablenkmittel gemäß DE 10 2009 054 232 A1, die Lichtstrahlen unterschiedlicher Leuchtpunkte des Displays 2a in unterschiedliche Abstrahlrichtungen ablenken.

Zur Ansteuerung der flächigen Pixelanordnung 2 zur Erzeugung eines kontaktanalogen 3D-Effekts beim Benutzer 6 ist ferner in an sich bekannter Weise eine Steuerungseinheit 24 für das Display 2a und das Mikrolinsenarray 2b vorgesehen. Die Steuerungseinheit 24 kann beispielsweise von einer Bilderzeugungseinheit 23 einen als virtuelles Anzeigebild darzustellenden Anzeigeinhalt erhalten. Dabei kann die Bilderzeugungseinheit 23 insbesondere zur Berechnung einer geeigneten stereoskopischen Darstellung darzustellender Umfeldobjekte für den Benutzer 6 ausgebildet sein und hierzu beispielsweise von einer Umfelderfassungseinheit 26 Daten über ein aktuell vorausliegendes Umfeld 20 des Kraftfahrzeugs 15 und/oder von einer Eye-Tracking-Einheit 25, die z. B. eine oder mehr Kameras umfassen kann, eine aktuelle Augenposition des Benutzers 6 erhalten. Die jeweiligen Signalleitungen sind in Fig. 6 durch Pfeile angedeutet.

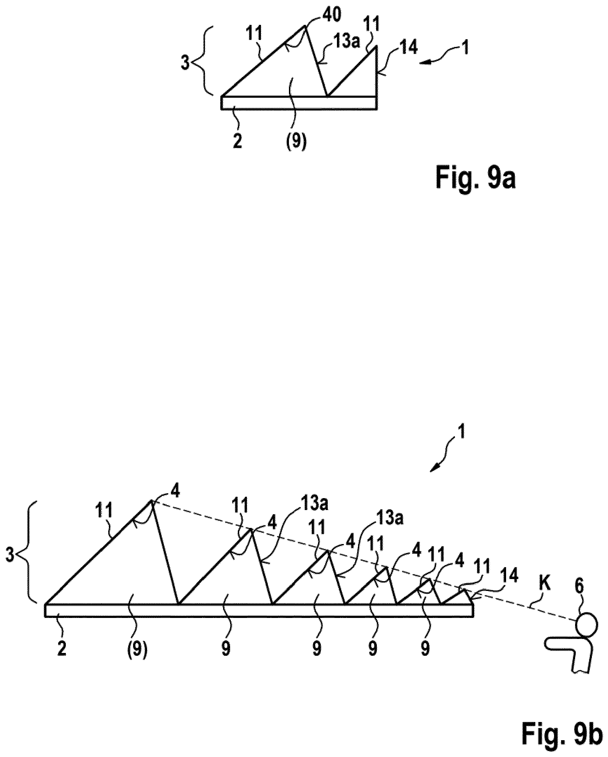

Fig. 9a-9b zeigen jeweils in einer schematischen vertikalen Querschnittsansicht weitere spezifische Ausgestaltungen der Blickfeldanzeigevorrichtung 1 gemäß der obigen Ausführungsform. Die reflexunterdrückende Umlenkanordnung 3 der Fig. 9a-9b unterscheidet sich von derjenigen der Fig. 1 und 6 dadurch, dass sie nur eine einzige große Reflexionsfläche 40 (Fig. 9a) oder mehrere Reflexionsflächen 4 mit untereinander variierenden Höhen senkrecht zur flächigen Pixelanordnung 2 (Fig. 9b) aufweist.

Mit der in Fig. 9a gezeigten Blickfeldanzeigevorrichtung 1 mit einer einzigen großen, beispielsweise etwa 6 cm (in Richtung senkrecht zur flächigen Pixelanordnung 2) hohen Reflexionsfläche 40 kann bereits ein Field-of-View erzielt werden, das in vertikaler Richtung vergleichbar zu dem eingangs erwähnten herkömmlichen HUD in heutigen Kraftfahrzeugen ist. Gleichzeitig kann aber die Blickfeldanzeigevorrichtung 1 der Fig. 9a aufgrund von deren flachem Aufbau deutlich breiter als das herkömmliche HUD in horizontaler Richtung ausgebildet sein, was insgesamt ein entsprechend deutlich größeres Field-of-View ergeben kann. Dabei ist es möglich, jedoch nicht zwingend erforderlich, dass die Reflexionsfläche 40 durch eine Mantelflächenseite eines Prismas 9 gebildet ist. Stattdessen kann es sich bei der Reflexionsfläche 40 auch einfach um einen geneigten Spiegel mit einer zu dessen Stabilität und der Verletzungsfreiheit eines Benutzers erforderlichen Dicke handeln, weil diese Dicke keinen Einfluss auf das erzeugte virtuelle Anzeigebild hat. Das gilt genauso für die jeweils am nächsten an die Frontscheibe 5 angeordnete Reflexionsfläche 4 in den Fig. 1 und 6. Wie auch in Fig. 1 und 6, ist in Fig. 9a gegenüber der Reflexionsfläche 40 zur Störreflexunterdrückung eine Attrappe mit einer dem Benutzer 6 zugewandten lichtabsorbierenden Abdeckfläche 14 und einer zur Reflexionsfläche 40 parallelen lichtabsorbierenden Rückseite 11 angeordnet.

In Fig. 9b kann für die erste von links Reflexionsfläche 4, die beispielsweise in einem Kraftfahrzeug am nächsten an dessen Frontscheibe 5 angeordnet ist, das Gleiche wie für die Reflexionsfläche 40 der Fig. 9a gelten. Durch weitere, in deren Höhe jeweils sukzessive reduzierte und wie in Fig. 9b gezeigt durch entsprechend unterschiedlich hohe Prismen 9 gebildete Reflexionsflächen 4 ist ein gegenüber Fig. 9a noch größeres Field-of-View der Blickfeldanzeigevorrichtung 1 erreichbar.

Durch die in Fig. 9a und 9b sukzessive abnehmenden Höhen der Reflexionsflächen 40, 4 bzw. deren Rückseiten 11 können deren obere Kanten auf eine zu den Augen des Benutzers 6 führende Linie K auch bei beispielsweise gegenüber Fig. 1 stärker zur Frontscheibe 5 geneigtem Abschnitt der Oberseite 7 der Instrumententafel 7 des Kraftfahrzeugs ausgerichtet sein.

Bei den in den Fig. 1 bis 9b gezeigten Blickfeldanzeigevorrichtungen kann mit einer flächigen Pixelanordnung 2, die statt eines autostereoskopischen einen 2D-Bildschirm aufweist, ein virtuelles Anzeigebild in einer feststehenden Entfernung von etwas unter oder über einem Meter, bei typischen Kraftfahrzeugabmessungen etwa 1,2 m, vom Benutzer 6 erzeugt werden. Dabei ist auch kein Eye-Tracking erforderlich. In diesem Bereich können damit z. B. als Ersatz für eine herkömmliche Kombi-Instrumentenanzeige Informationen beispielsweise zum Fahrzeugzustand permanent angezeigt werden, ohne dass ein Eye-Tracking ausgewertet werden muss.

Fig. 10 und 11 veranschaulichen das erfindungsgemäße Verfahren. Fig. 10 zeigt einen Blick durch eine Frontscheibe 5 eines Kraftfahrzeugs 15 aus Fahrersicht. In einem oberen Frontscheibenabschnitt 5a sind virtuelle Anzeigebilder 50, 51 und 52 gezeigt, die von einer Blickfeldanzeigevorrichtung unter Anwendung der hierin dargelegten Schritte zur Beseitigung eines horizontal versetzten Doppelbildes erzeugt wurden. Zum Vergleich ist in einem unteren Frontscheibenabschnitt 5b das Gleiche ohne Anwendung dieser Schritte gezeigt. Es kann sich dabei insbesondere um eine Blickfeldanzeigevorrichtung 1 gemäß der obigen Ausführungsform (beispielsweise gemäß Fig. 1 bis 9b) handeln, die ein horizontal breites Field-of-View (beispielsweise wie in Fig. 2a-2d, 5b gezeigt) aufweist.

Wie in dem unteren Frontscheibenabschnitt 5b der Fig. 10 gezeigt, führt die Doppelreflexion des Projektionslichtstrahlenbündels L (vgl. Fig. 1 oder 6) an zwei optischen Grenzflächen der Frontscheibe 5 (beispielsweise dem Luft-Glas-Übergang an deren vorderen und hinteren Oberfläche) bei nicht senkrechtem Einfall des Projektionslichts auf die Frontscheibe 5 zu Doppelbildern der virtuellen Anzeigebilder 50, 51 und 52. Einfachheitshalber stellen hier die virtuellen Anzeigebilder 50, 51 und 52 rechteckige Kästchen mit vertikalen Bildelementkanten 50a, 51a und 52a und horizontalen Bildelementkanten 50b, 51b und 52b dar. Die vertikalen Bildelementkanten 51a und 52a weisen ohne weitere Gegenmaßnahmen horizontal versetzte Doppelbilder auf, die deutlich für den Benutzer sichtbar sind. (Der vertikale Versatz der horizontalen Bildelementkanten 50b, 51b und 52b wird hier nicht behandelt und kann beispielsweise in herkömmlicher Weise durch eine vertikale Keilfolie beseitigt werden.)

Wie in dem oberen Frontscheibenabschnitt 5a der Fig. 10 gezeigt, werden gemäß dem hierin dargelegten Verfahren die vertikalen Bildelementkanten 50a, 51a und 52a ermittelt und zu einem jeweils angepassten Kippwinkel derart verkippt, dass die horizontal versetzten Doppelbilder der vertikalen Bildelementkanten 51a und 52a aus der Sicht des Benutzers zusammenfallen (Koinzidenz), wodurch die Bildelementkanten 51a und 52a präzise als jeweils eine scharfe Kante erscheinen.

Wie in Fig. 10 ferner erkennbar ist, hängt dies stark von der Position der virtuellen Anzeigebilder 50, 51 und 52 in der Frontscheibe 5 relativ zur aktuellen Position des Benutzers (hier des Fahrers des Kraftfahrzeugs 15) ab. Letztere kann z. B. durch eine mittige Blickachse B des Benutzers charakterisiert werden, die in der Frontscheibe 5 liegt und eine Blickrichtung geradeaus durch die Frontscheibe 5 angibt:

Je weiter virtuelle Anzeigebilder 51 und 52 links oder rechts von der Blickachse B liegen, desto größer ist der horizontale Versatz bei den Doppelbildern der vertikalen Bildelementkanten 51a und 52a, was also für Blickanzeigevorrichtungen mit einem breiten Field-of-View besonders relevant ist. Hingegen ist beim nah an der Blickachse B liegenden virtuellen Anzeigebild 50 kaum ein horizontaler Versatz seiner vertikalen Bildelementkanten 50a zu merken. Daher kann beispielsweise auch ein Abstand der ermittelten vertikalen Bildelementkanten 50a, 51a und 52a zu der Blickachse B ermittelt werden und jeweils in die Berechnung des angepassten Kippwinkels eingehen, zu welchem die ermittelten Bildelementkanten 51a und 52a links und rechts der Blickachse B in entsprechend entgegengesetzte Richtungen dann verkippt werden.

Beispielsweise kann im Rahmen der Bilderzeugung durch die Bilderzeugungseinheit 23 (vgl. Fig. 6) ein in der Steuerungseinheit 24 implementierter Rechenalgorithmus automatisch vertikal darzustellende Bildelementkanten 50a, 51a und 52a sowie deren Abstand zu der Blickachse B ermitteln, den jeweiligen angepassten Kippwinkel berechnen und den vom Projektionslichtstrahlenbündel L zu transportierenden Anzeigeinhalt entsprechend anpassen.

Fig. 11 zeigt ein weiteres Beispiel durch Anwendung des erfindungsgemäßen Verfahrens von einer Blickfeldanzeigevorrichtung erzeugter scharfer vertikaler Linien 53a in einem virtuellen Anzeigebild 53. Ganz analog zu Fig. 10 ist auch hier ein Fahrerblick durch eine Frontscheibe 5 eines Kraftfahrzeugs gezeigt, sodass das in Bezug auf Fig. 10 Ausgeführte sinngemäß auch für Fig. 11 gilt. Das virtuelle Anzeigebild 53 ist in diesem Beispiel eine etwa quadratische helle, insbesondere kontaktanaloge Markierung eines Umfeldobjekts vor dem Kraftfahrzeug in einem weit rechts vom Fahrer liegenden Abschnitt der Frontscheibe 5. Die Markierung weist einige schmale schwarze vertikale Linien 53a auf, die entlang einer Quadratseite verlaufen. Zur präzisen, d. h. scharfen Darstellung der Linien 53a ohne ein störendes horizontal versetztes Doppelbild ist das virtuelle Anzeigebild 53 in Fig. 11 um einen geeigneten angepassten Kippwinkel aus der Vertikalen verkippt worden.

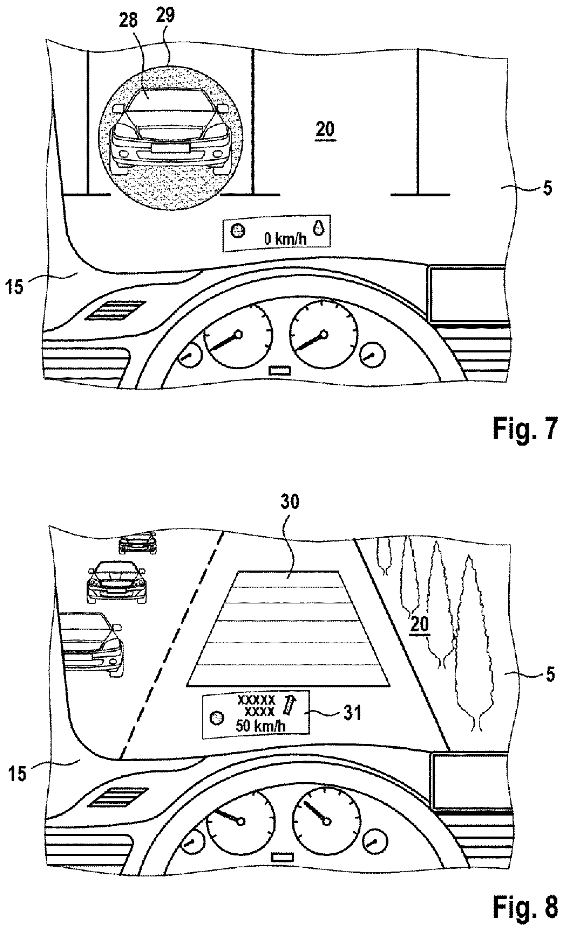

Mit Bezug auf Fig. 5b, 7 und 8 werden Weiterbildungen dieses Verfahrens zum Betreiben einer Blickfeldanzeigevorrichtung 1 gemäß Fig. 6 beschrieben. (Dabei weisen die in Fig. 7 und 8 als virtuelle Anzeigebilder eingeblendeten Inhalte 29, 30 und 31 keine Randlinien auf, vielmehr dienen die angedeuteten Randlinien nur zum Zweck der Verdeutlichung für den Leser.)

Bei einer Variante des Verfahrens wird von der Umfelderfassungseinheit 26 ein aktuell hinter der Frontscheibe 5 vorausliegendes Umfeld 20 des Kraftfahrzeugs 15 erfasst. Abhängig von dem erfassten Umfeld 20 werden in das Blickfeld des Benutzers 6, insbesondere des Fahrers des Kraftfahrzeugs 15, kontaktanalog Informationen wie virtuelle Objektbilder und/oder Objektmarkierungen zur Unterstützung des Benutzers 6 bei der Navigation beim selbständigen oder assistierten Fahren oder zur Visualisierung/Verdeutlichung einer vom Kraftfahrzeug 15 erfassten Fahrsituation und seiner Fahrabsicht beim hoch- oder vollautomatisierten Fahren (HAF/VAF) eingeblendet. So wird in Fig. 5b in kontaktanaloger Weise ein virtueller Abbiegepfeil 27 in die richtige Abbiegestelle der vorausliegenden Straße eingeblendet, in Fig. 7a ein auf einem Parkplatz bei Dunkelheit erfasstes Fremdfahrzeug 28 vor dem eigenen Kraftfahrzeug 15 mit einem farbigen, beispielswiese roten Kreis 29 deutlich sichtbar virtuell markiert, und in Fig. 8 auf einer Straße ohne Spurmarkierungen eine korrekte Spur vor dem eigenen Kraftfahrzeug 15 durch eine durchgehende farbige, beispielswiese gelbe, virtuelle Spurmarkierung 30 in Form der gesamten zu befahrenden Spur visualisiert.

Anhand der Fig. 8 wird eine weitere Variante, mit der vorstehenden kombinierbare Variante des Verfahrens beschrieben. Hier umfasst die Blickfeldanzeigevorrichtung 1 gemäß dem oben erwähnten Hybridansatz neben der flächigen Pixelanordnung 2 und der reflexunterdrückenden Umlenkanordnung 3 ferner eine herkömmliche Projektionseinheit der eingangs genannten Art (nicht gezeigt) zum Erzeugen eines in ein Blickfeld eines Benutzers 6 eingeblendeten weiteren virtuellen Anzeigebilds 31.

Dabei kann die flächige Pixelanordnung 2 mit der darauf angeordneten reflexunterdrückenden Umlenkanordnung 3 in der Oberseite 7 der Instrumententafel 8 des Kraftfahrzeugs 15 beispielswiese wie in Fig. 5a angedeutet neben der Lichtaustrittsöffnung 16 der Projektionseinheit, insbesondere unmittelbar an diese anschließend oder um diese herum angeordnet sein. Insbesondere kann aber die Lichtaustrittsöffnung 16 der Projektionseinheit - anders als in Fig. 5a für deren herkömmliche Lage gezeigt - näher an der Scheibenwurzel der Frontscheibe 5 und angrenzend an die in Fig. 5a untere Konturseite der flächigen Pixelanordnung 2 angeordnet sein und in horizontaler Richtung länglicher als in Fig. 5a ausgebildet sein, um so zur Anzeige des weiteren virtuellen Anzeigebilds 31 tiefer unter dem Horizont, beispielsweise unmittelbar unter dem von der flächigen Pixelanordnung 2 erzeugten kontaktanalogen virtuellen Anzeigebild genutzt zu werden.

### Bezugszeichenliste

- 1: Blickfeldanzeigevorrichtung
- 1a: Kontur der Blickfeldanzeigevorrichtung in einer Oberseite einer Instrumententafel
- 2: flächige Pixelanordnung
- 2a: Display
- 2b: Mikrolinsenarray
- 3: reflexunterdrückende Umlenkanordnung
- 4, 40: zueinander parallele, geneigte Reflexionsflächen der reflexunterdrückenden Umlenkanordnung
- 5: Frontscheibe
- 5a/5b: oberer/unterer Frontscheibenabschnitt
- 6: Benutzer der Blickfeldanzeigevorrichtung
- 7: Oberseite der Instrumententafel
- 8: Instrumententafel eines Kraftfahrzeugs
- 9: Prisma
- 9a: untere Mantelflächenseite eines Prismas
- 10: obere Prismenkante
- 11: lichtabsorbierend ausgebildete Rückseiten der Reflexionsflächen der reflexunterdrückenden Umlenkanordnung
- 12: Umgebungslicht
- 13: Lichtaustrittsebene(n) der reflexunterdrückenden Umlenkanordnung
- 13a: Lichtaustrittsfläche eines Prismas
- 14: Abdeckfläche
- 15: Kraftfahrzeug
- 16: Lichtaustrittsöffnung einer herkömmlichen HUD-Projektionseinheit
- 16a: Rand der Lichtaustrittsöffnung
- 17: Projektionsbereich der Blickfeldanzeigevorrichtung in der Frontscheibe aus Fahrersicht
- 17a: Begrenzung des Projektionsbereichs aus Fahrersicht
- 18: Projektionsbereich der Blickfeldanzeigevorrichtung in der Frontscheibe aus Beifahrersicht
- 18a: Begrenzung des Projektionsbereichs aus Beifahrersicht
- 19: Projektionsbereich einer herkömmlichen HUD-Projektionseinheit
- 19a: Begrenzung des Projektionsbereichs der herkömmlichen HUD-Projektionseinheit
- 20: vorausliegendes bzw. hinter der Projektionsscheibe liegendes Umfeld
- 21: sichtbare Streifen
- 22: nicht sichtbare Streifen
- 23: Bilderzeugungseinheit
- 24: Steuerungseinheit
- 25: Eye-Tracking-Einheit
- 26: Umfelderfassungseinheit
- 27: kontaktanalog eingeblendeter Abbiegepfeil
- 28: erfasstes Fremdfahrzeug vor dem eigenen Kraftfahrzeug
- 29: kontaktanalog eingeblendete Markierung des erfassten Fremdfahrzeugs
- 30: kontaktanalog eingeblendete Spurmarkierung
- 31: statisch eingeblendetes weiteres virtuelles Anzeigebild einer zusätzlich vorgesehenen herkömmlichen HUD-Projektionseinheit
- 50, 51, 52, 53: kastenförmige virtuelle Anzeigebilder
- 50a, 51a, 52a, 53a: vertikale Bildelementkanten
- 50b, 51b, 52b, 53b: horizontale Bildelementkanten
- B: (mittige) Blickachse des Benutzers der Blickfeldanzeigevorrichtung
- L: Projektionslichtstrahlenbündel
- A: Querschnittsfläche eines Prismas
- K: Linie aus Benutzersicht, auf der obere Kanten der mehreren Reflexionsflächen liegen

## Patentansprüche

1. Verfahren zum Betreiben einer Blickfeldanzeigevorrichtung (1), insbesondere für ein Kraftfahrzeug (15), die dazu ausgebildet ist, ein Projektionslichtstrahlenbündel (L) mit einem Anzeigeinhalt zu erzeugen und auf eine teilweise transparente reflektierende Projektionsscheibe, insbesondere eine Frontscheibe (5) des Kraftfahrzeugs (15), derart zu projizieren, dass dahinter ein in ein Blickfeld eines Benutzers (6) eingeblendetes virtuelles Anzeigebild (51, 52, 53) erzeugt wird, **dadurch gekennzeichnet, dass** das Verfahren folgende Schritte umfasst:
- Ermitteln vertikaler oder eine vertikale Komponente aufweisender Bildelementkanten (51a, 52a, 53a) im einzublendenden virtuellen Anzeigebild (51, 52, 53);
- Bereitstellen einer aktuellen Position, insbesondere einer Augenposition oder einer Blickachse (B), des Benutzers (6); und
- Verkippen der so ermittelten Bildelementkanten (51a, 52a, 53a) zu einem jeweils derart angepassten Kippwinkel bezüglich der Vertikalen, dass sich durch Doppelreflexion des Projektionslichtstrahlenbündels (L) an zwei optischen Grenzflächen der Projektionsscheibe hervorgerufene, in horizontaler Richtung zueinander versetzte Doppelbilder der jeweiligen Bildelementkanten (51a, 52a, 53a) im virtuellen Anzeigebild (51, 52, 53) für den Benutzer (6) überlagern und damit im Wesentlichen scharf erscheinen;
- wobei der jeweilige angepasste Kippwinkel abhängig von der bereitgestellten aktuellen Position des Benutzers (6) ermittelt wird.

2. Verfahren nach Anspruch 1, bei dem als die genannte aktuelle Position eine Blickachse (B) des Benutzers (6) bereitgestellt wird und der jeweilige angepasste Kippwinkel abhängig von einem Abstand der jeweiligen ermittelten vertikalen oder eine vertikale Komponente aufweisenden Bildelementkante (51a, 52a, 53a) von der Blickachse (B) des Benutzers (6) ermittelt wird.

3. Verfahren nach Anspruch 1 oder 2, wobei die Projektionsscheibe ein zwischen den zwei optischen Grenzflächen angeordnetes Neigungselement, insbesondere eine Keilfolie, zur Überlagerung in vertikaler Richtung zueinander versetzter, durch Doppelreflexion des Projektionslichtstrahlenbündels (L) an den zwei optischen Grenzflächen hervorgerufener Doppelbilder horizontaler oder eine horizontale Komponente aufweisender Bildelementkanten (50b, 51b, 52b) im einzublendenden virtuellen Anzeigebild (50, 51, 52) aufweist.

4. Verfahren nach einem der vorhergehenden Ansprüche, wobei in vertikaler Richtung zueinander versetzte, durch Doppelreflexion des Projektionslichtstrahlenbündels (L) an den zwei optischen Grenzflächen der Projektionsscheibe hervorgerufene Doppelbilder horizontaler oder eine horizontale Komponente aufweisender Bildelementkanten (50b, 51b, 52b) im einzublendenden virtuellen Anzeigebild (50, 51, 52) für den Benutzer (6) durch Versehen der jeweiligen Bildelemente mit einer horizontale Komponenten aufweisenden Textur kaschiert werden.

5. Verfahren nach einem der vorhergehenden Ansprüche, wobei die Blickfeldanzeigevorrichtung (1) Folgendes umfasst:
- eine elektrisch ansteuerbare flächige Pixelanordnung (2), insbesondere mindestens einen Flachbildschirm, zur Erzeugung des Projektionslichtstrahlenbündels (L) mit einem Anzeigeinhalt,
- eine auf der flächigen Pixelanordnung (2) angeordnete reflexunterdrückende Umlenkanordnung (3), umfassend eine oder mehrere sich entlang der flächigen Pixelanordnung (2) in einem vorbestimmten spitzen Winkel dazu und parallel zueinander erstreckende ebene Reflexionsfläche(n) (4, 40) zum Projizieren des erzeugten Projektionslichtstrahlenbündels (L) auf die Projektionsscheibe,
- wobei die eine oder die mehreren Reflexionsfläche(n) (4, 40) auf deren Rückseite(n) (11) zu einer Störreflexunterdrückung lichtabsorbierend ausgebildet ist/sind.

6. Verfahren nach Anspruch 5, wobei
- mindestens eine der Reflexionsflächen (4, 40) der reflexunterdrückenden Umlenkanordnung (3) durch eine Mantelflächenseite eines auf der flächigen Pixelanordnung (2) angeordneten Prismas (9), insbesondere mit einer dreieckigen Querschnittsfläche (A), gebildet ist.

7. Verfahren nach Anspruch 5 oder 6, wobei
- für jeweils zwei benachbarte Reflexionsflächen (4) eine Lichtaustrittsebene (13), die eine obere Kante der einen Reflexionsfläche (4) und die untere Kante der Rückseite (11) der nächsten Reflexionsfläche (4) verbindet, im Betrieb der Blickfeldanzeigevorrichtung (1) im Wesentlichen senkrecht zu der Projektionsscheibe ausgerichtet ist.

8. Verfahren nach einem der Ansprüche 5 bis 7, wobei obere Kanten der mehreren zueinander parallelen Reflexionsflächen (4) der reflexunterdrückenden Umlenkanordnung (3) aus der Sicht des Benutzers (6) im Wesentlichen auf einer Linie (K) liegen, insbesondere durch die Schritte:
- Bereitstellen einer aktuellen Position, insbesondere einer Augenposition oder einer Blickrichtung, des Benutzers (6) und
- Ausrichten oberer Kanten der mehreren zueinander parallelen Reflexionsflächen (4) der reflexunterdrückenden Umlenkanordnung (3) im Wesentlichen in eine zu den Augen des Benutzers (6) führende Linie (K) abhängig von der bereitgestellten aktuellen Benutzerposition.

9. Verfahren nach einem der Ansprüche 5 bis 8, wobei die flächige Pixelanordnung (2) mindestens einen autostereoskopischen Bildschirm (2a-2b) und/oder mindestens einen 2D-Bildschirm umfasst, mit den weiteren Schritten:
- Erfassen eines aktuellen Umfelds (20) hinter der Projektionsscheibe, insbesondere eines vorausliegenden Umfelds (20) des Kraftfahrzeugs (15); und
- Einblenden kontaktanaloger Informationen, insbesondere virtueller Objektbilder und/oder Objektmarkierungen (27, 29, 30, 50, 51, 52, 53), in das Blickfeld des Benutzers (6) über den mindestens einen autostereoskopischen Bildschirm (2a-2b) und/oder den mindestens einen 2D-Bildschirm abhängig von dem erfassten Umfeld (20), insbesondere zur Unterstützung des Benutzers (6) bei der Navigation oder zur Verdeutlichung einer Fahrsituation beim hoch- oder vollautomatisierten Fahren.

10. Verfahren nach einem der Ansprüche 5 bis 9, wobei
- die Blickfeldanzeigevorrichtung (1) ferner zum Erzeugen eines in ein Blickfeld des Benutzers (6) eingeblendeten weiteren virtuellen Anzeigebilds (31) eine Projektionseinheit aufweist, die in ihrem Inneren sowohl eine Bildgebungseinheit zum Erzeugen eines weiteren Projektionslichtstrahlenbündels mit einem weiteren Anzeigeinhalt als auch eine gegenüber der Bildgebungseinheit angeordnete Projektionsoptik zum Projizieren des erzeugten weiteren Projektionslichtstrahlenbündels auf eine Teilfläche der Projektionsscheibe umfasst, wobei die flächige Pixelanordnung (2) mit der darauf angeordneten reflexunterdrückenden Umlenkanordnung (3) vorzugsweise neben einer Lichtaustrittsöffnung (16) der Projektionseinheit, insbesondere unmittelbar an diese anschließend und/oder um diese herum und/oder bündig zu deren Rand (16a), angeordnet ist, mit den weiteren Schritten:
- Bereitstellen von Systemzustandsdaten eines sich bewegenden übergeordneten Systems, insbesondere eines Kraftfahrzeugs (15), beispielsweise über einen aktuellen Betriebszustand eines Motors oder eines Energiespeichers an Bord, und/oder Bereitstellen von Streckendaten für einen vorausliegenden Streckenabschnitt; und
- Einblenden vorbestimmter statischer Informationen (31) in das Blickfeld des Benutzers (6) über die Projektionseinheit und/oder den mindestens einen autostereoskopischen Bildschirm (2a-2b) und/oder den mindestens einen 2D-Bildschirm der flächigen Pixelanordnung (2) abhängig von den bereitgestellten Systemzustandsdaten und Streckendaten.

11. Computerprogramm, welches, wenn es in einer Steuerungseinheit (24) ausgeführt wird, dazu eingerichtet ist, ein Verfahren nach einem der vorhergehenden Ansprüche auszuführen.

12. Steuerungseinheit (24) für eine Blickfeldanzeigevorrichtung (1), **dadurch gekennzeichnet, dass** die
Steuerungseinheit (24) zum automatischen Durchführen eines Verfahrens nach einem der Ansprüche 1 bis 10 ausgebildet ist.

13. Kraftfahrzeug (15), umfassend:
- eine sich zwischen einer Frontscheibe (5) des Kraftfahrzeugs (15) und einer Instrumententafel (8) erstreckende Oberseite (7) der Instrumententafel (8);
- eine auf, in oder unter der Oberseite (7) der Instrumententafel (8) angeordnete Blickfeldanzeigevorrichtung (1) zum Einblenden eines virtuellen Anzeigebilds (27, 29, 30, 50, 51, 52, 53) in ein Blickfeld des Fahrers und/oder weiterer Insassen, bei der insbesondere eine elektrisch ansteuerbare flächige Pixelanordnung (2) zur Erzeugung des Projektionslichtstrahlenbündels (L) oder eine darauf angeordnete reflexunterdrückende Umlenkanordnung (3) zum Projizieren des erzeugten Projektionslichtstrahlenbündels (L) auf die Projektionsscheibe mit einer oder mehreren sich entlang der flächigen Pixelanordnung (2) in einem vorbestimmten spitzen Winkel dazu und parallel zueinander erstreckenden ebenen Reflexionsfläche(n) (4, 40) mit lichtabsorbierend ausgebildeten Rückseite(n) (11) im Wesentlichen bündig zu der Oberseite (7) der Instrumententafel (8) angeordnet ist; und
- ferner eine Steuerungseinheit (24) gemäß Anspruch 12.

## Claims

1. Method for operating a visual field display apparatus (1), in particular for a motor vehicle (15), which visual field display apparatus is embodied to generate a projection light beam (L) with display content and to project the latter onto a partly transparent reflecting projection screen, in particular a windshield (5) of the motor vehicle (15), in such a way that a virtual display image (51, 52, 53) superimposed into a visual field of a user (6) is generated therebehind, **characterized in that** the method comprises the following steps:
- ascertaining vertical image element edges (51a, 52a, 53a), or image element edges with a vertical component, in the virtual display image (51, 52, 53) to be superimposed;
- providing a current position of the user (6), in particular an eye position or a visual axis (B) of the user; and
- tilting the image element edges (51a, 52a, 53a), ascertained thus, to a respective tilt angle with respect to the vertical direction, which tilt angle is adapted in such a way that horizontally offset double images of the respective image element edges (51a, 52a, 53a), which are caused by a double reflection of the projection light beam (L) at two optical interfaces of the projection screen, are overlaid for the user (6) in the virtual display image (51, 52, 53) and consequently appear substantially sharp;
- wherein the respective adapted tilt angle is ascertained on the basis of the provided current position of the user (6).

2. Method according to Claim 1, wherein a visual axis (B) of the user (6) is provided as the specified current position of the user and the respective adapted tilt angle is ascertained on the basis of a distance of the respective ascertained vertical image element edge (51a, 52a, 53a) or of the respective ascertained image element edge with a vertical component from the visual axis (B) of the user (6).

3. Method according to Claim 1 or 2, wherein the projection screen comprises an inclination element arranged between the two optical interfaces, in particular a wedge film, for overlaying, in the virtual display image (50, 51, 52) to be superimposed, vertically offset double images of horizontal image element edges (50b, 51b, 52b) or image element edges with a horizontal component, the double images having been caused by the double reflection of the projection light beam (L) at the two optical interfaces.

4. Method according to any of the preceding claims, wherein vertically offset double images of horizontal image element edges (50b, 51b, 52b) or of image element edges with a horizontal component are hidden from the user (6) in the virtual display image (50, 51, 52) to be superimposed by way of providing the respective image elements with a texture having horizontal components, the double images having been caused by the double reflection of the projection light beam (L) at the two optical interfaces of the projection screen.

5. Method according to any of the preceding claims, wherein the visual field display apparatus (1) comprises the following:
- an electrically drivable planar pixel arrangement (2), in particular at least one flat screen, for generating the projection light beam (L) with display content,
- a reflection-suppressing deflection arrangement (3) arranged on the planar pixel arrangement (2) and comprising one or more planar reflection surface(s) (4, 40), which extend along the planar pixel arrangement (2) at a predefined acute angle thereto and parallel to one another, for the purposes of projecting the generated projection light beam (L) on the projection screen,
- wherein the one or more reflection surface (s) (4, 40) have a light-absorbing embodiment on their back side(s) (11) for the purposes of suppressing interfering reflections.

6. Method according to Claim 5, wherein
- at least one of the reflection surfaces (4, 40) of the reflection-suppressing deflection arrangement (3) is formed by a lateral side of a prism (9) arranged on the planar pixel arrangement (2), the prism in particular having a triangular cross-sectional area (A).

7. Method according to Claim 5 or 6, wherein
- for respectively two adjacent reflection surfaces (4), a light emergence plane (13), which connects an upper edge of the one reflection surface (4) to the lower edge of the back side (11) of the next reflection surface (4), is aligned substantially perpendicular to the projection screen during the operation of the visual field display apparatus (1).

8. Method according to any of Claims 5 to 7, wherein upper edges of the plurality of mutually parallel reflection surfaces (4) of the reflection-suppressing deflection arrangement (3) are located substantially along a line (K) from the view of the user (6), in particular as a result of the following steps:
- providing a current position of the user (6), in particular an eye position or a viewing direction, and
- aligning upper edges of the plurality of mutually parallel reflection surfaces (4) of the reflection-suppressing deflection arrangement (3) substantially along a line (K) leading to the eyes of the user (6) on the basis of the current user position provided.

9. Method according to any of Claims 5 to 8, wherein the planar pixel arrangement (2) comprises at least one autostereoscopic screen (2a-2b) and/or at least one 2D screen, including the further steps of:
- capturing current surroundings (20) behind the projection screen, in particular surroundings (20) ahead of the motor vehicle (15); and
- superimposing contact-analogue information, in particular virtual object images and/or object markings (27, 29, 30, 50, 51, 52, 53), into the visual field of the user (6) by way of the at least one autostereoscopic screen (2a-2b) and/or the at least one 2D screen on the basis of the captured surroundings (20), in particular for assisting the user (6) during navigation or for clarifying a driving situation in the case of highly automated or fully automated driving.

10. Method according to any of Claims 5 to 9, wherein
- the visual field display apparatus (1) further comprises a projection unit for generating a further virtual display image (31) that is superimposed into a visual field of the user (6), said projection unit comprising, in its interior, both an imaging unit for generating a further projection light beam with further image content and a projection optical unit, arranged opposite the imaging unit, for projecting the generated further projection light beam onto a portion of the projection screen, wherein the planar pixel arrangement (2) with the reflection-suppressing deflection arrangement (3) arranged thereon is preferably arranged next to a light emergence opening (16) of the projection unit, in particular directly adjoining the latter and/or around the latter and/or flush with the edge (16a) of the latter, including the further steps of:
- providing system state data of a moving overarching system, in particular a motor vehicle (15), for example about a current operating state of a motor or an energy store on board, and/or providing route data for a route section ahead; and
- superimposing predetermined static information (31) into the visual field of the user (6) by way of the projection unit and/or the at least one autostereoscopic screen (2a-2b) and/or the at least one 2D screen of the planar pixel arrangement (2) on the basis of the provided system state data and route data.

11. Computer program which, when executed in a control unit (24), is configured to carry out a method according to any of the preceding claims.

12. Control unit (24) for a visual field display apparatus (1), **characterized in that** the control unit (24) is embodied to automatically implement a method according to any of Claims 1 to 10.

13. Motor vehicle (15), comprising:
- an upper side (7) of an instrument panel (8) extending between a windshield (5) of the motor vehicle (15) and the instrument panel (8);
- a visual field display apparatus (1), arranged on, in or under the upper side (7) of the instrument panel (8), for superimposing a virtual display image (27, 29, 30, 50, 51, 52, 53) into a visual field of the driver and/or further occupants, in which, in particular, an electrically drivable planar pixel arrangement (2) for generating the projection light beam (L) or a reflection-suppressing deflection arrangement (3), arranged thereon, with one or more planar reflection surface(s) (4, 40) with light-absorbing back side(s) (11), which extend along the planar pixel arrangement (2) at a predefined acute angle thereto and parallel to one another, for the purposes of projecting the generated projection light beam (L) on the projection screen is arranged substantially flush with the upper side (7) of the instrument panel (8); and
- furthermore a control unit (24) according to Claim 12.

## Revendications

1. Procédé de fonctionnement d'un dispositif d'affichage de champ de vision (1), en particulier d'un véhicule automobile (15), qui est conçu pour générer un faisceau lumineux de projection (L) pourvu d'un contenu d'affichage et le projeter sur une vitre de projection réfléchissante partiellement transparente, en particulier un pare-brise (5) du véhicule automobile (15), de manière à générer en arrière une image d'affichage virtuelle (51, 52, 53) incorporée dans le champ de vision d'un utilisateur (6),
**caractérisé en ce que** le procédé comprend les étapes suivantes :
- déterminer des bords d'élément d'image (51a, 52a, 53a) verticaux ou comportant une composante verticale dans l'image d'affichage virtuelle (51, 52, 53) à incorporer ;
- fournir une position actuelle, en particulier une position des yeux ou un axe de vision (B), de l'utilisateur (6) ; et
- incliner des bords d'élément d'image (51a, 52a, 53a) ainsi déterminés suivant un angle d'inclinaison respectif par rapport à la verticale de manière à ce que des images doubles des bords d'élément d'image respectifs (51a, 52a, 53a), qui sont produites par double réflexion du faisceau lumineux de projection (L) sur deux surfaces limites optiques et qui sont décalées l'une de l'autre dans la direction horizontale, se superposent dans l'image d'affichage virtuel (51, 52, 53) pour l'utilisateur (6) et apparaissent ainsi de manière sensiblement nette ;
- l'angle d'inclinaison adapté respectif étant déterminé en fonction de la position actuelle fournie de l'utilisateur (6).

2. Procédé selon la revendication 1, dans lequel un axe de vision (B) de l'utilisateur (6) est fourni comme ladite position actuelle et l'angle d'inclinaison adapté respectif est déterminé en fonction d'une distance du bord d'élément d'image (51a, 52a, 53a) vertical, ou comportant une composante verticale, déterminé respectif à l'axe de vision (B) de l'utilisateur (6).

3. Procédé selon la revendication 1 ou 2, la vitre de projection comportant un élément d'inclinaison disposé entre les deux surfaces limites optiques, en particulier une feuille en coin, pour superposer des images doubles, produites par double réflexion du faisceau lumineux de projection (L) sur les deux surfaces limites optiques décalées l'une de l'autre dans la direction verticale, de bords d'élément d'image (50b, 51b, 52b) horizontaux ou ayant une composante horizontale dans l'image d'affichage virtuelle (50, 51, 52) à incorporer.

4. Procédé selon l'une des revendications précédentes, des images doubles, produites par double réflexion du faisceau lumineux de projection (L) sur les deux surfaces limites optiques décalées l'une de l'autre dans la direction verticale, de bords d'élément d'image (50b, 51b, 52b) horizontaux ou ayant une composante horizontale dans l'image d'affichage virtuelle (50, 51, 52) à incorporer étant doublées pour l'utilisateur (6) par fourniture des éléments d'image respectifs pourvus d'une texture comportant des composantes horizontales.

5. Procédé selon l'une des revendications précédentes, le dispositif d'affichage de champ de vision (1) comprenant ce qui suit :
- un ensemble de pixels sensiblement bidimensionnels (2) commandables électriquement, en particulier au moins un écran plat, destiné à générer le faisceau lumineux de projection (L) avec un contenu d'affichage,
- un ensemble de déviation anti-réflexion (3) disposé sur l'ensemble de pixels sensiblement bidimensionnels (2) et comprenant une ou plusieurs surfaces de réflexion planes (4, 40) s'étendant le long de l'ensemble de pixels sensiblement bidimensionnels (2) suivant un angle aigu prédéterminé par rapport à celui-ci et parallèlement l'une à l'autre et destinées à projeter le faisceau lumineux de projection généré (L) sur la vitre de projection,
- les une ou plusieurs surfaces de réflexion (4, 40) étant conçues pour absorber la lumière sur leur(s) face(s) arrière (11) afin de supprimer les réflexions parasites.

6. Procédé selon la revendication 5,
- au moins une des surfaces de réflexion (4, 40) de l'ensemble de déviation anti-réflexion (3) étant formée par un côté de surface latérale d'un prisme (9) disposé sur l'ensemble de pixels sensiblement bidimensionnel (2), en particulier avec une surface en coupe transversale triangulaire (A).

7. Procédé selon la revendication 5 ou 6,
- à chaque fois pour deux surfaces de réflexion (4) adjacentes, un plan de sortie de lumière (13) qui relie un bord supérieur d'une surface de réflexion (4) et le bord inférieur de la face arrière (11) de la surface de réflexion suivante (4), est orienté sensiblement perpendiculairement à la vitre de projection pendant le fonctionnement du dispositif d'affichage de champ de vision (1).

8. Procédé selon l'une des revendications 5 à 7, des bords supérieurs des plusieurs surfaces de réflexion (4) parallèles entre elles du dispositif de déviation anti-réflexion (3) se trouvent sensiblement sur une ligne (K) du point de vue de l'utilisateur (6), ledit procédé comprenant en particulier les étapes suivantes :
- fournir une position actuelle, notamment une position des yeux ou une direction de vision, de l'utilisateur (6) et
- orienter des bords supérieurs des plusieurs surfaces de réflexion (4) parallèles entre elles de l'ensemble de déviation anti-réflexion (3) sensiblement sur une ligne (K) menant aux yeux de l'utilisateur (6) en fonction de la position actuelle fournie de l'utilisateur.

9. Procédé selon l'une des revendications 5 à 8, l'ensemble de pixels sensiblement bidimensionnels (2) comprenant au moins un écran auto-stéréoscopique (2a-2b) et/ou au moins un écran 2D, ledit procédé comprenant les étapes supplémentaires suivantes :
- détecter un environnement actuel (20) en arrière de la vitre de projection, en particulier un environnement avant (20) du véhicule automobile (15) ; et
- incorporer des informations de type contact, en particulier d'images d'objets virtuels et/ou de marquages d'objets (27, 29, 30, 50, 51, 52, 53), dans le champ de vision (6) de l'utilisateur par le biais d'au moins un écran auto-stéréoscopique (2a-2b) et/ou l'au moins un écran 2D en fonction de l'environnement détecté (20), notamment pour assister l'utilisateur (6) dans la navigation ou pour clarifier une situation de conduite lors d'une conduite hautement ou entièrement automatisée.

10. Procédé selon l'une des revendications 5 à 9,
- le dispositif d'affichage de champ de vision (1) comportant en outre une unité de projection destinée à générer une autre image d'affichage virtuelle (31) incorporée dans un champ de vision de l'utilisateur (6) et comprenant à l'intérieur aussi bien une unité d'imagerie destinée à générer un autre faisceau lumineux de projection pourvu d'un autre contenu d'affichage et une optique de projection disposée en regard de l'unité d'imagerie et destinée à projeter l'autre faisceau lumineux de projection généré sur une partie de surface de la vitre de projection, l'ensemble de pixels sensiblement bidimensionnels (2) sur lequel est disposé l'ensemble de déviation anti-réflexion (3) étant disposé de préférence à côté d'une ouverture de sortie de lumière (16) de l'unité de projection, en particulier directement à la suite de celle-ci et/ou autour de celle-ci et/ou au ras de son bord (16a), ledit procédé comprenant les étapes suivantes :
- fournir des données d'état d'un système supérieur en mouvement, en particulier d'un véhicule automobile (15), par exemple par le biais d'un état de fonctionnement actuel d'un moteur ou d'un accumulateur d'énergie à bord, et/ou fournir des données d'itinéraire pour une portion d'itinéraire à venir ; et
- incorporer des informations statiques prédéterminées (31) dans le champ de vision de l'utilisateur (6) par le biais de l'unité de projection et/ou de l'au moins un écran auto-stéréoscopique (2a-2b) et/ou de l'au moins un écran 2D de l'ensemble de pixels sensiblement bidimensionnel (2) en fonction des données d'état de système et des données d'itinéraire fournies.

11. Logiciel qui, lorsqu'il est exécuté dans une unité de commande (24), est conçu pour mettre en œuvre un procédé selon l'une des revendications précédentes.

12. Unité de commande (24) destinée à un dispositif d'affichage de champ de vision (1), **caractérisée en ce que** l'unité de commande (24) est conçue pour mettre en œuvre automatiquement un procédé selon l'une des revendications 1 à 10.

13. Véhicule automobile (15), comprenant :
- un côté supérieur (7) d'un tableau de bord (8) qui s'étend entre un pare-brise (5) du véhicule automobile (15) et le tableau de bord (8) ;
- un dispositif d'affichage de champ de vision (1) disposé sur, dans ou sous le côté supérieur (7) du tableau de bord (8) et destiné à incorporer une image d'affichage virtuelle (27, 29, 30, 50, 51, 52, 53) dans un champ de vision du conducteur et/ou d'autres occupants, dispositif dans lequel en particulier un ensemble de pixels sensiblement bidimensionnel (2) commandable électriquement destiné à générer le faisceau lumineux de projection (L) ou un ensemble de déviation anti-réflexion (3) disposé sur celui-ci et destiné à projeter le faisceau lumineux de projection généré (L) sur la vitre de projection comprenant une ou plusieurs surfaces de réflexion planes (4, 40) s'étendant le long de l'ensemble de pixels sensiblement bidimensionnels (2) suivant un angle aigu prédéterminé par rapport à celui-ci et parallèles les unes aux autres avec une ou plusieurs faces arrière (11) conçues pour absorber la lumière est disposé sensiblement au ras du côté supérieur (7) du tableau de bord (8) ; et
- en outre une unité de commande (24) selon la revendication 12.
